# EUROPEAN PATENT SPECIFICATION

(11) **EP 4 020 895 B1**
(45) Date of publication and mention of the grant of the patent: **25.10.2023**
(21) Application number: 20859122.2
(22) Date of filing: 07.04.2020
(51) Int. Cl.: H04L 12/28, H04Q 11/00, H04L 5/00, H04J 3/06

(54) **METHOD FOR USER EQUIPMENT TO GET ONLINE, AND USER EQUIPMENT**
VERFAHREN FÜR EIN BENUTZERGERÄT, UM ONLINE ZU GEHEN, UND BENUTZERGERÄT
PROCÉDÉ DE MISE EN LIGNE D'UN ÉQUIPEMENT D'UTILISATEUR, ET ÉQUIPEMENT D'UTILISATEUR

(30) Priority: 30.08.2019 CN 201910818777
(43) Date of publication of application: 29.06.2022
(73) Proprietor: Huawei Technologies Co., Ltd., Longgang District Shenzhen, Guangdong 518129 (CN)
(72) Inventor: ZHANG, Xiaofeng, Shenzhen, Guangdong 518129 (CN); WANG, Xiang, Shenzhen, Guangdong 518129 (CN)
(74) Representative: Pfenning, Meinig & Partner mbB
(86) International application number: PCT/CN2020/083581
(87) International publication number: WO 2021/036268

(56) References cited:
- EP-A2- 3 531 609
- WO-A1-2019/095623
- WO-A1-2019/128374
- CN-A- 106 464 554
- CN-A- 109 756 318
- VLADIMIR OKSMAN INTEL INC USA: "Use of G.994.1 handshake for MGFAST in P2MP scenario;C51", ITU-T DRAFT; STUDY PERIOD 2017-2020; STUDY GROUP 15; SERIES C51, INTERNATIONAL TELECOMMUNICATION UNION, GENEVA ; CH , vol. 4/15 20 June 2018 (2018-06-20), pages 1-9, XP044246401, Retrieved from the Internet: URL:https://www.itu.int/ifa/ifa/t/2017/sg1 5/docs/rgm/Q4-180625/C/T17-SG15RGM-Q4-1806 25-C-0051.docx [retrieved on 2018-06-20]

## Description

### TECHNICAL FIELD

This application relates to the field of information processing technologies, and in particular, to a get-online method for user equipment and user equipment.

### BACKGROUND

Currently, in a passive optical network (PON), an optical line terminal (OLT) may distribute user data to distributed processing units (DPUs) by using an optical distribution network (ODN). The DPUs may distribute the user data to a plurality of pieces of user equipment. Before a DPU distributes user data to a plurality of pieces of user equipment, the plurality of pieces of user equipment first need to access the DPU, and perform negotiating capability with the DPU, to implement get-online of the user equipment. Because a plurality of pieces of user equipment may access a same DPU, this connection may be referred to as a point-to-multipoint connection (P2MP).

In a related technology, a phase in which user equipment accesses a DPU is a collision control access phase, and a phase in which the user equipment performs negotiating capability with the DPU is a handshake access phase. In the collision control access phase, the user equipment may send a P2MP request to the DPU to acknowledge whether the DPU supports the P2MP. After receiving the P2MP request, if the DPU supports the P2MP, the DPU may feed back a P2MP response signal to the user equipment. After detecting the P2MP response signal, the user equipment may send an access signal of a specified frequency to the DPU for registration. If when receiving the access signal sent by the user equipment, the DPU further receives an access signal that is of a specified frequency and that is sent by other user equipment, these access signals causes interference, and consequently the DPU cannot distinguish between the access signals of the user equipment. If when receiving the access signal from the user equipment, the DPU receives no access signal from another device, it may indicate that the other user equipment causes no interference for the current user equipment, and the DPU may return a corresponding response signal to the user equipment for the access signal, to indicate that the user equipment completes registration. In this case, the collision control access phase is completed. In the handshake access phase, when detecting the response message, the user equipment may negotiate with the DPU according to a handshake protocol. The handshake access phase may further include three phases: a start-up phase, a clear-down phase, and a message exchange phase. In the start-up phase, the user equipment may complete clock synchronization and carrier set selection with the DPU through signal exchange, to enter a transaction (transaction) initial state. Subsequently, the user equipment may perform exchanging message with the DPU based on a selected carrier set, to complete procedures of the following two phases.

It can be learned that in the related technology, such as exemplified in the ITU-T standardization document "Use of G.994.1 handshake for MGFAST in P2MP scenario;C51", XP044246401, or in the international patent application WO 2019/095623 A1, the user equipment first needs to perform signaling exchange with the DPU to complete the collision control access phase, and subsequently performs negotiating capability with the DPU by using the handshake protocol. However, because a procedure of subsequently performing capability negotiation by using the handshake protocol is relatively long, get-online time of the user equipment is excessively long.

### SUMMARY

This application provides a get-online method for user equipment and user equipment. The technical solutions are as follows:

According to a first aspect, a get-online method for user equipment is provided. The method includes: in a collision control access phase, sending a first signal to an access device at a first uplink frequency, where the first uplink frequency is an uplink frequency supported by a point-to-multipoint P2MP connection; receiving a second signal that is in response to the first signal and that is sent by the access device at a first downlink frequency and second downlink frequencies, where the first downlink frequency is a downlink frequency supported by the P2MP connection, and the second downlink frequencies are downlink frequencies supported by a point-to-point P2P connection; sending a third signal to the access device at the first uplink frequency and a plurality of second uplink frequencies included in a target carrier set, where the target carrier set is a subset of an intersection set of carrier sets including the second downlink frequencies and carrier sets allowed to be used by the user equipment, the second uplink frequencies are uplink frequencies supported by the P2P connection, and each carrier set includes a plurality of uplink frequencies and a plurality of downlink frequencies; and performing negotiating capability with the access device based on the target carrier set in a handshake access phase.

In this application, in the collision control access phase, the user equipment interacts with the access device, to implement target carrier set selection. Then, in the handshake access phase, the user equipment may directly perform negotiating capability with the access device based on the target carrier set, without performing carrier set selection through dedicated signaling exchange, thereby reducing signaling exchanges in a get-online process of the user equipment, shortening a get-online procedure of the user equipment, and reducing get-online time.

Optionally, before the sending a third signal to the access device at the first uplink frequency and a target carrier set, the method further includes: obtaining the carrier sets including the second downlink frequencies; and using, as the target carrier set, a carrier set in the obtained carrier sets that is allowed to be used by the user equipment.

Optionally, before the sending a third signal to the access device at the first uplink frequency and a target carrier set, the method further includes: obtaining a plurality of carrier sets that include the second downlink frequencies and that are allowed to be used by the user equipment; sending a fourth signal to the access device at the first uplink frequency and a plurality of third uplink frequencies included in the plurality of carrier sets; receiving a fifth signal that is in response to the fourth signal and that is sent by the access device at the first downlink frequency and a plurality of third downlink frequencies included in a plurality of candidate carrier sets, where the plurality of candidate carrier sets are some of the plurality of carrier sets; and selecting a carrier set from the plurality of candidate carrier sets as the target carrier set.

Optionally, after receiving the second signal that is in response to the first signal and that is sent by the access device at the first downlink frequency and the second downlink frequencies, the user equipment may further perform clock synchronization based on a physical characteristic of the second signal. That is, clock synchronization originally performed in the handshake access phase may be alternatively completed in the collision control access phase by using the second signal, to shorten an interaction procedure of the handshake access phase, thereby shortening get-online duration.

Optionally, an implementation process of performing negotiating capability with the access device based on the target carrier set in the handshake access phase may include: in the handshake access phase, sending a first identifier to the access device, where the first identifier is used to indicate that the current device enters a transaction initial state; and when receiving a second identifier that is in response to the first identifier and that is sent by the access device, performing exchanging message with the access device based on the target carrier set, to implement capability negotiation between the current device and the access device, where the second identifier is used to indicate that the access device enters the transaction initial state.

Optionally, an implementation process of performing negotiating capability with the access device based on the target carrier set in the handshake access phase may include: in the handshake access phase, receiving a third identifier sent by the access device, where the third identifier is used to indicate that the access device starts transaction initialization; sending a first identifier that is in response to the third identifier to the access device, where the first identifier is used to indicate that the current device enters a transaction initial state; and when receiving a second identifier that is in response to the first identifier and that is sent by the access device, performing exchanging message with the access device based on the target carrier set, to implement capability negotiation between the current device and the access device, where the second identifier is used to indicate that the access device enters the transaction initial state.

Optionally, an implementation process of performing negotiating capability with the access device based on the target carrier set in the handshake access phase may include: in the handshake access phase, receiving a second identifier sent by the access device, and sending a first identifier that is in response to the second identifier to the access device, where the second identifier is used to indicate that the access device enters a transaction initial state, and the first identifier is used to indicate that the current device enters the transaction initial state; and performing exchanging message with the access device based on the target carrier set, to implement capability negotiation between the current device and the access device.

According to a second aspect, a get-online method for user equipment is provided. The method includes: in a collision control access phase, sending a first signal to an access device at a first uplink frequency and second uplink frequencies, where the first uplink frequency is an uplink frequency supported by a point-to-multipoint P2MP connection, and the second uplink frequencies are uplink frequencies supported by a point-to-point P2P connection; receiving a second signal that is in response to the first signal and that is sent by the access device at a first downlink frequency and a plurality of second downlink frequencies, where the first downlink frequency is a downlink frequency supported by the P2MP connection, and the plurality of second downlink frequencies are downlink frequencies that are selected by the access device based on the second uplink frequencies and that are supported by the P2P connection; sending a third signal to the access device at the first uplink frequency and a plurality of third uplink frequencies included in a target carrier set, where the target carrier set is a subset of an intersection set of carrier sets including some or all of the plurality of second downlink frequencies and carrier sets allowed to be used by the user equipment, the plurality of third uplink frequencies are uplink frequencies supported by the P2P connection, and each carrier set includes a plurality of uplink frequencies and a plurality of downlink frequencies; and performing negotiating capability with the access device based on the target carrier set in a handshake access phase.

In this embodiment of this application, in the collision control access phase, the user equipment may send the first signal at the second uplink frequencies, to provide to-be-selected carrier sets for the access device. Then, the user equipment receives the second signal fed back by the access device at the second downlink frequencies, and sends the third signal at the target carrier set based on the second signal, to complete carrier set selection. In this way, the user equipment can directly perform negotiating capability with the access device based on the determined target carrier set in the handshake access phase. Therefore, it can be learned that in this embodiment of this application, when getting online, the user equipment can complete carrier set selection in the collision control access phase. In this way, the user equipment subsequently does not need to perform carrier set selection through separate signaling exchange in the handshake access phase, thereby reducing interaction procedures and shortening access time.

Optionally, before the sending a third signal to the access device at a target carrier set, the method further includes: obtaining carrier sets including any of the plurality of second downlink frequencies; and using, as the target carrier set, a carrier set in the obtained carrier sets that is allowed to be used by the user equipment.

Optionally, after the second signal that is in response to the first signal and that is sent by the access device at the first downlink frequency and the plurality of second downlink frequencies is received, clock synchronization may be further performed based on a physical characteristic of the second signal.

Optionally, an implementation process of performing negotiating capability with the access device based on the target carrier set in the handshake access phase may include: in the handshake access phase, sending a first identifier to the access device, where the first identifier is used to indicate that the current device enters a transaction initial state; and when receiving a second identifier that is in response to the first identifier and that is sent by the access device, performing exchanging message with the access device based on the target carrier set, to implement capability negotiation between the current device and the access device, where the second identifier is used to indicate that the access device enters the transaction initial state.

Optionally, an implementation process of performing negotiating capability with the access device based on the target carrier set in the handshake access phase may include: in the handshake access phase, receiving a third identifier sent by the access device, where the third identifier is used to indicate that the access device starts transaction initialization; sending a first identifier that is in response to the third identifier to the access device, where the first identifier is used to indicate that the current device enters a transaction initial state; and when receiving a second identifier that is in response to the first identifier and that is sent by the access device, performing exchanging message with the access device based on the target carrier set, to implement capability negotiation between the current device and the access device, where the second identifier is used to indicate that the access device enters the transaction initial state.

Optionally, an implementation process of performing negotiating capability with the access device based on the target carrier set in the handshake access phase may include: in the handshake access phase, receiving a second identifier sent by the access device, and sending a first identifier that is in response to the second identifier to the access device, where the second identifier is used to indicate that the access device enters a transaction initial state, and the first identifier is used to indicate that the current device enters the transaction initial state; and performing exchanging message with the access device based on the target carrier set, to implement capability negotiation between the current device and the access device.

According to a third aspect, user equipment is provided. The user equipment has a function of implementing behavior in the get-online method for user equipment in the first aspect or the second aspect. The user equipment includes at least one module, and the at least one module is configured to implement the get-online method for user equipment provided in the first aspect or the second aspect.

According to a fourth aspect, user equipment is provided. A structure of the user equipment includes a processor and a memory. The memory is configured to store a program that supports the user equipment in performing the get-online method for user equipment provided in the first aspect or the second aspect, and store data used to implement the get-online method for user equipment provided in the first aspect or the second aspect. The processor is configured to execute the program stored in the memory. An operation apparatus of the storage device may further include a communication bus, and the communication bus is configured to establish a connection between the processor and the memory.

According to a fifth aspect, a computer-readable storage medium is provided. The computer-readable storage medium stores instructions; and when the instructions are run on a computer, the computer is enabled to perform the get-online method for user equipment according to the first aspect or the second aspect.

According to a sixth aspect, a computer program product including instructions is provided. When the computer program product runs on a computer, the computer is enabled to perform the get-online method for user equipment according to the first aspect or the second aspect.

Technical effects achieved by the third aspect, the fourth aspect, the fifth aspect, and the sixth aspect are similar to those achieved by corresponding technical means in the first aspect or the second aspect. Details are not described herein again.

Beneficial effects brought by the technical solutions provided in this application include at least the following.

In embodiments of this application, in the collision control access phase, the user equipment may send the first signal to the access device at the first uplink frequency; and then receive the second signal that is in response to the first signal and that is sent by the access device at the first downlink frequency and the second downlink frequencies, and send the third signal at the first uplink frequency and uplink frequencies included in the target carrier set, to complete carrier set selection. The user equipment may perform negotiating capability with the access device based on the determined target carrier set in the handshake access phase. Therefore, it can be learned that in the embodiments of this application, when getting online, the user equipment can complete carrier set selection in the collision control access phase. In this way, the user equipment subsequently does not need to perform carrier set selection through separate signaling exchange in the handshake access phase, thereby reducing interaction procedures and shortening access time.

### BRIEF DESCRIPTION OF DRAWINGS

FIG. 1 is a diagram of an architecture of a system in a get-online method for user equipment according to an embodiment of this application;
FIG. 2 is a schematic diagram of a structure of user equipment according to an embodiment of this application;
FIG. 3 is a flowchart of a get-online method for user equipment according to an embodiment of this application;
FIG. 4 is a flowchart of a time sequence in which user equipment interacts with an access device;
FIG. 5 is a flowchart of another time sequence in which user equipment interacts with an access device;
FIG. 6 is a flowchart of still another time sequence in which user equipment interacts with an access device;
FIG. 7 is a flowchart of a time sequence in which user equipment interacts with an access device when the user equipment gets online in a related technology;
FIG. 8 is a flowchart of another get-online method for user equipment according to an embodiment of this application;
FIG. 9 is a schematic diagram of a structure of user equipment according to an embodiment of this application; and
FIG. 10 is a schematic diagram of a structure of another user equipment according to an embodiment of this application.

### DESCRIPTION OF EMBODIMENTS

To make the objectives, technical solutions, and advantages of this application clearer, the following further describes the implementations of this application in detail with reference to the accompanying drawings.

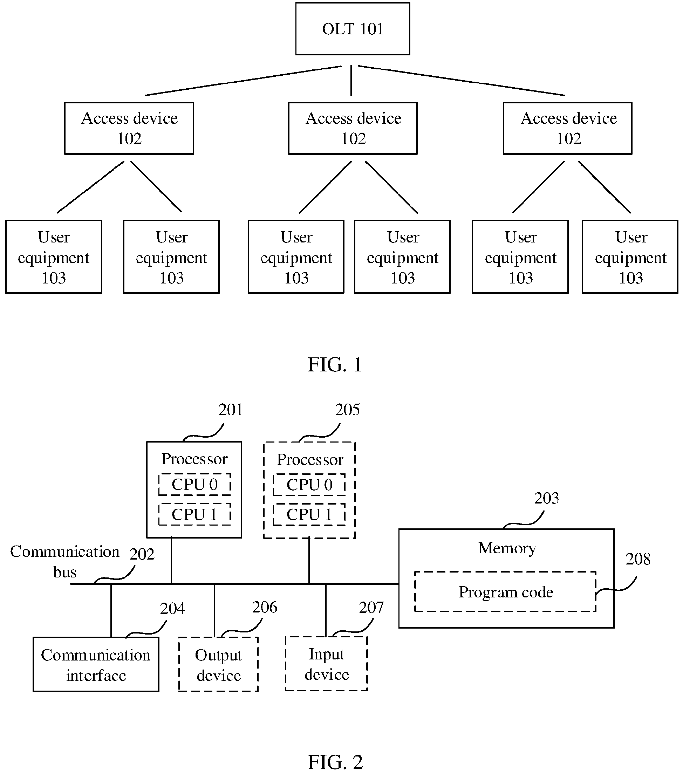

FIG. 1 is a diagram of an architecture of a network system according to an embodiment of this application. As shown in FIG. 1, the network system includes an OLT 101, a plurality of access devices 102, and a plurality of pieces of user equipment 103. The OLT 101 may communicate with the access device 102 by using an ODN network, and the access device 102 may communicate with a plurality of pieces of user equipment 103.

It should be noted that the OLT 101 may send downlink data to a plurality of access devices 102 by using an ODN network, and receive, by using the ODN network, uplink data sent by each access device 102. The ODN network is an optical channel for transmitting data between the OLT 101 and the access device 102.

The access device 102 may include an optical network unit (optical network unit, ONU) and a G.mgFast device. The G.mgFast device is a device designed by using an ITU-T G.mgFast standard. One access device 102 may be connected to one or more pieces of user equipment 103. That is, a plurality of pieces of user equipment 103 may access a network by accessing a same access device 102. When a plurality of pieces of user equipment 103 access a same access device 102, a collision control access phase and a handshake access phase may be obtained through division. In the collision control access phase, if two or more of the plurality of pieces of user equipment 103 send access signals to the access device at a same moment, these access signals causes mutual interference, and consequently the access device cannot perform distinguishing. In this case, it is considered that a collision occurs between these pieces of user equipment. In this case, these pieces of user equipment cannot complete registration. If the access device 102 receives, at a specific moment, an access signal sent by only one piece of user equipment, the access device 102 may return a corresponding response signal to the user equipment, to complete registration of the user equipment. In this case, the collision control access phase is completed. In the handshake access phase, the access device 102 interacts with the user equipment 103 whose registration succeeds, so that the user equipment 103 accesses a network. After the user equipment 103 accesses the network, the access device 102 may distribute downlink data to the plurality of pieces of connected user equipment 103, and the access device 102 may transmit received uplink data of the user equipment 103 to an OLT 101. It should be noted that when the access device 102 sends the uplink data, the uplink data reaches only the OLT 101, rather than another access device.

FIG. 2 is a schematic diagram of a structure of user equipment according to an embodiment of the present invention. The user equipment in FIG. 1 may be implemented by using the user equipment shown in FIG. 2. With reference to FIG. 2, the user equipment includes at least one processor 201, a communication bus 202, a memory 203, and at least one communication interface 204.

The processor 201 may be a general-purpose central processing unit (Central Processing Unit, CPU), a microprocessor, an application-specific integrated circuit (application-specific integrated circuit, ASIC), or one or more integrated circuits configured to control program execution in the solutions of this application.

The communication bus 202 may include a path for information transmission between the foregoing components.

The memory 203 may be a read-only memory (ROM) or another type of static storage device capable of storing static information and instructions, or a random access memory (RAM) or another type of dynamic storage device capable of storing information and instructions, or may be an electrically erasable programmable read-only memory (EEPROM), a compact disc read-only memory (CD-ROM) or other compact disc storage, optical disc storage (including a compact disc, a laser disc, an optical disc, a digital versatile disc, a Blu-ray disc, and the like), a magnetic disk storage medium or another magnetic storage device, or any other medium capable of carrying or storing expected program code in an instruction form or a data structure form and capable of being accessed by a computer. However, the memory 203 is not limited thereto. The memory 203 may exist independently, and be connected to the processor 201 through the communication bus 202. The memory 203 may alternatively be integrated with the processor 201.

The communication interface 204 may be any apparatus like a transceiver, and is configured to communicate with another device or a communication network, for example, the Ethernet, a radio access network (RAN), or a wireless local area network (Wireless Local Area Network, WLAN).

During specific implementation, in an embodiment, the processor 201 may include one or more CPUs, for example, a CPU 0 and a CPU 1 shown in FIG. 2.

During specific implementation, in an embodiment, the user equipment may include a plurality of processors, for example, the processor 201 and a processor 205 shown in FIG. 2. Each of the processors may be a single-core processor (single-CPU) or a multi-core processor (multi-CPU). The processor herein may refer to one or more devices, circuits, and/or processing cores configured to process data (for example, computer program instructions).

During specific implementation, in an embodiment, the user equipment may further include an output device 206 and an input device 207. The output device 206 communicates with the processor 201, and may display information in a plurality of connection manners. For example, the output device 206 may be a liquid crystal display (LCD), a light emitting diode (LED) display device, a cathode ray tube (CRT) display device, or a projector. The input device 207 communicates with the processor 201, and may receive an input from a user equipment in a plurality of connection manners. For example, the input device 207 may be a mouse, a keyboard, a touchscreen device, a sensing device, or the like.

The user equipment may be a general-purpose computer device or a special-purpose computer device. In specific implementation, the computer device may be a desktop, a portable computer, a network server, a personal digital assistant (PDA), a mobile phone, a tablet computer, a wireless terminal device, a communication device, or an embedded device. A type of the computer device is not limited in this embodiment of this application.

The memory 203 is configured to store program code that is used to perform the solutions of this application, and execution is controlled by the processor 201. The processor 201 is configured to execute program code 208 stored in the memory 203. The program code 208 may include one or more software modules. The user equipment shown in FIG. 1 may access a network by using the processor 201 and the one or more software modules in the program code 208 in the memory 203.

The following describes in detail a get-online method for user equipment provided in the embodiments of this application.

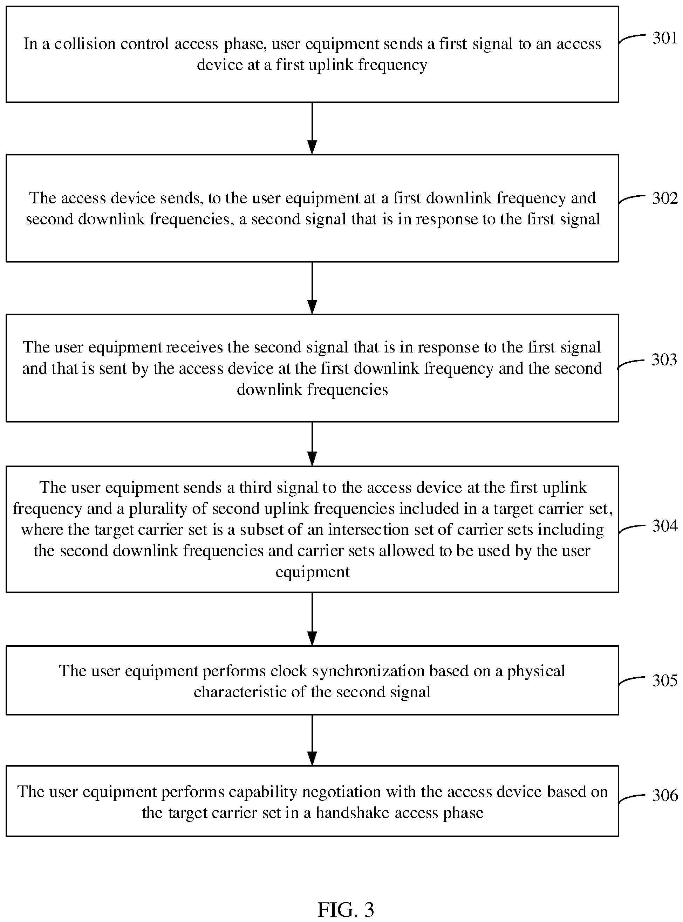

FIG. 3 is a flowchart of a get-online method for user equipment according to an embodiment of this application. Refer to FIG. 3. The method is applicable to the user equipment and the access device that are shown in FIG. 1. The method may include the following steps.

Step 301: In a collision control access phase, the user equipment sends a first signal to the access device at a first uplink frequency.

The first uplink frequency is an uplink frequency supported by the user equipment when the user equipment selects a P2MP connection.

In this embodiment of this application, when the user equipment needs to get online again after getting offline, the user equipment may select, from uplink frequencies supported by the P2MP connection, a frequency as the first uplink frequency, and actively send the first signal to the access device in the P2MP connection at the first uplink frequency. For example, when the user equipment is powered on again after being powered off, the user equipment may actively send the first signal to the access device at the first uplink frequency.

It should be noted that, in this embodiment of this application, the first signal may be a common signal that includes no information content, or the first signal may be a signal that includes information content. The user equipment sends the first signal mainly to give, to the access device by using the first uplink frequency used to send the first signal, an indication that the user equipment supports the P2MP connection.

Step 302: The access device sends, to the user equipment at a first downlink frequency and second downlink frequencies, a second signal that is in response to the first signal.

After receiving the first signal sent by the user equipment, the access device may detect whether the access device supports the P2MP connection. If the access device supports the P2MP connection, the access device may send, at the first downlink frequency and the second downlink frequencies, the second signal that is in response to the first signal. Optionally, if the access device does not support the P2MP connection, the access device may not feed back any signal.

It should be noted that in this embodiment of this application, the access device may select, from downlink frequencies supported by the access device when the access device selects the P2MP connection, a frequency as the first downlink frequency, and select, from downlink frequencies supported by a P2P connection, a plurality of frequencies as the second downlink frequencies. In this way, a part of the second signal at the first downlink frequency is used to notify the user equipment that the access device supports the P2MP connection, that is, allows to be accessed by the user equipment in the P2MP connection. Parts of the second signal at the second downlink frequencies are used to provide to-be-selected carrier sets for the user equipment. Similarly, it should be noted that the second signal may include information content, or may include no information content but is merely a common signal.

All frequencies supported by each device when the device uses the P2P connection may be assigned to a plurality of carrier sets, and each carrier set may include a plurality of downlink frequencies and a plurality of uplink frequencies. For example, each carrier set may include three downlink frequencies and three uplink frequencies. Based on this, the access device may select, from the plurality of carrier sets, a carrier set supported by the access device, and select, from the carrier set supported by the access device, downlink frequencies as the second downlink frequencies.

For example, in a possible implementation, the access device may select some carrier sets from all carrier sets supported by the access device, and use a plurality of downlink frequencies in the some selected carrier sets as the second downlink frequencies.

In another possible implementation, the access device may select one or more downlink frequencies from each of all carrier sets supported by the access device, and use all selected downlink frequencies as the second downlink frequencies.

After determining the first downlink frequency and the second downlink frequencies, the access device may send the second signal at the first downlink frequency and the second downlink frequencies. In this case, the second signal may be used to notify the user equipment that the access device supports the P2MP connection, and may be further used to provide initial to-be-selected carrier sets for the user equipment.

Step 303: The user equipment receives the second signal that is in response to the first signal and that is sent by the access device at the first downlink frequency and the second downlink frequencies.

Step 304: The user equipment sends a third signal to the access device at the first uplink frequency and a plurality of second uplink frequencies included in a target carrier set, where the target carrier set is a subset of an intersection set of carrier sets including the second downlink frequencies and carrier sets allowed to be used by the user equipment, and each carrier set includes a plurality of uplink frequencies and a plurality of downlink frequencies.

After receiving the second signal sent by the access device at the first downlink frequency and the second downlink frequencies, the user equipment may determine, based on the first downlink frequency, that the access device supports the P2MP connection.

In addition, in a possible implementation, the user equipment may obtain the carrier sets including the second downlink frequencies, and select a carrier set supported by the current device from the obtained carrier sets as the target carrier set. The target carrier set includes a plurality of uplink frequencies and a plurality of downlink frequencies. The uplink frequencies may be referred to as second uplink frequencies, and the downlink frequencies may be referred to as second downlink frequencies. After obtaining the target carrier set, the user equipment may send the third signal to the access device at the first uplink frequency and the plurality of second uplink frequencies included in the target carrier set. The second uplink frequencies are uplink frequencies allowed to be used by the user equipment when the user equipment selects the P2P connection. It can be learned from the foregoing steps that there may be a plurality of second downlink frequencies. In this case, the carrier sets that include the second downlink frequencies and that are obtained by the user equipment are carrier sets including any second downlink frequencies.

It can be learned from the descriptions in step 302 that, frequencies allowed to be used by the device when the device uses the P2P connection may be assigned to a plurality of carrier sets, and each carrier set includes a plurality of uplink frequencies and a plurality of downlink frequencies. Based on this, after receiving the second signal sent at the second downlink frequencies, the user equipment may obtain, from a plurality of carrier sets supported by P2P, the carrier sets including the second downlink frequencies. Because the carrier sets that include the second downlink frequencies and that are obtained by the user equipment may include carrier sets that are not supported by the user equipment, that is, uplink frequencies included in these carrier sets may not be supported by the user equipment. Therefore, the user equipment may select a carrier set allowed to be used by the user equipment from the obtained carrier sets as the target carrier set. The uplink frequencies included in the target carrier set are the second uplink frequencies.

After determining the target carrier set, the user equipment may send the third signal at the plurality of second uplink frequencies included in the target carrier set. In this case, all the second uplink frequencies included in the target carrier set are uplink frequencies that are selected by the user equipment and that the user equipment wants to use. That is, parts of the third signal at the second uplink frequencies may be used to notify the access device of the carrier set currently selected by the user equipment. In addition, a part of the third signal at the first uplink frequency may be used to indicate the access device to perform registration for the user equipment. The third signal may be a common signal that includes no information content, or may be a signal that includes a registration request. It should be noted that the plurality of second uplink frequencies may be all or some of the uplink frequencies in the target carrier set, that is, the user equipment may select all or some of all the second uplink frequencies included in the target carrier set, and send the third signal to the access device at the selected uplink frequencies.

Optionally, in another possible implementation, the user equipment obtains a plurality of carrier sets that include the second downlink frequencies and that are allowed to be used by the user equipment; sends a fourth signal to the access device at the first uplink frequency and a plurality of third uplink frequencies included in the plurality of carrier sets; receives a fifth signal that is in response to the fourth signal and that is sent by the access device at the first downlink frequency and a plurality of third downlink frequencies included in a plurality of candidate carrier sets, where the plurality of candidate carrier sets are some of the plurality of carrier sets; selects a carrier set from the plurality of candidate carrier sets as the target carrier set; and sends the third signal to the access device at the plurality of second uplink frequencies included in the target carrier set.

That is, after receiving the second signal, the user equipment may first obtain the carrier sets including the second downlink frequencies. Then, the user equipment may select, from the obtained carrier sets, all carrier sets supported by the user equipment, and select the plurality of carrier sets from all the carrier sets supported by the user equipment. The plurality of carrier sets may be some of all the carrier sets, or may be all the carrier sets. Then, the user equipment may send the fourth signal to the access device at the first uplink frequency and the plurality of third uplink frequencies included in the plurality of carrier sets. In this case, parts of the fourth signal at the third uplink frequencies are used to notify the access device of carrier sets that the user equipment supports and expects to use in the initial to-be-selected carrier sets provided by the access device. After receiving the fourth signal, the access device may select, from the plurality of carrier sets to which the plurality of third uplink frequencies belong, the plurality of candidate carrier sets recommended by the access device, and send the fifth signal at the first downlink frequency and the plurality of third downlink frequencies included in the plurality of candidate carrier sets. After receiving the fifth signal, the user equipment may select, as the target carrier set, the carrier set from the plurality of candidate carrier sets recommended by the access device, and send the third signal to the access device at the first uplink frequency and the plurality of second uplink frequencies included in the target carrier set. Similarly, the fourth signal and the fifth signal each may include information content, or may include no information content, and a key point is frequencies used when the fourth signal and the fifth signal are sent. In addition, it can be learned from the foregoing steps that there may be a plurality of second downlink frequencies. In this case, the carrier sets that include the second downlink frequencies and that are obtained by the user equipment are carrier sets including any second downlink frequencies.

Optionally, in this embodiment of this application, after the user equipment sends the third signal to the access device, the access device may further send, at the plurality of downlink frequencies included in the target carrier set, an acknowledgment signal that is in response to the third signal, to acknowledge the target carrier set selected by the user equipment. The acknowledgement signal may be used to acknowledge the target carrier set, and may be further used to indicate that registration of the user equipment is completed, that is, used to indicate that the collision control access phase is completed.

It should be noted that, because the target carrier set determined by the user equipment is one or more of carrier sets that are allowed to be used by the user equipment and that are selected from the carrier sets that include the second downlink frequencies, it can be learned that the target carrier set is the subset of the intersection set of the carrier sets including the second downlink frequencies and the carrier sets allowed to be used by the user equipment.

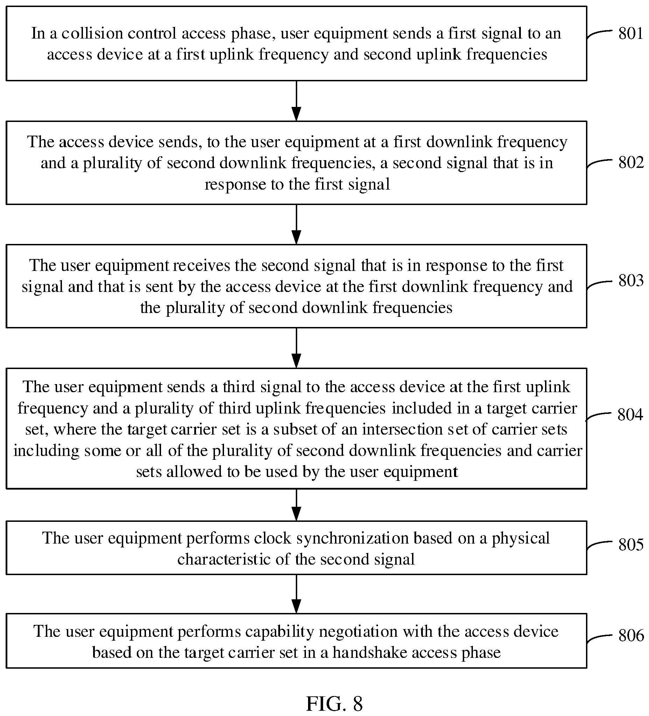

In addition, it should be noted that the carrier sets that include the second downlink frequencies and that are obtained by the user equipment may include no carrier set supported by the user equipment. In this case, the user equipment may directly select, from the plurality of carrier sets supported by the P2P connection, carrier sets supported by the user equipment, and send, with reference to a related implementation in a subsequent embodiment shown in FIG. 8, a signal to the access device at uplink frequencies included in the carrier sets supported by the user equipment, to provide initial to-be-selected carrier sets for the access device. Then, the access device selects candidate carrier sets, and then the user equipment determines a target carrier set.

Step 305: The user equipment performs clock synchronization based on a physical characteristic of the second signal.

In this embodiment of this application, after receiving the second signal, when sending, by using step 304, the third signal based on the second downlink frequencies at which the second signal is located, the user equipment may further perform clock synchronization based on the physical characteristic of the second signal. The physical characteristic of the second signal is a characteristic, such as a frequency, a receiving moment, or a phase, of the second signal, and is independent of whether the second signal includes content or a type of content included in the second signal.

For example, it can be learned from the foregoing that the user equipment receives the second signal sent by the access device at the first downlink frequency and the second downlink frequencies. Based on this, the user equipment may select a part of any frequency from the second signal, and then the user equipment may input the selected part into a phase-locked loop as reference information, to adjust a frequency and a phase of an oscillation signal generated in the phase-locked loop, thereby implementing synchronization between a clock of the user equipment and a clock of the access device.

The foregoing is only one possible clock synchronization implementation provided in this embodiment of this application. Certainly, the user equipment may alternatively perform, in another manner, clock synchronization by using the received second signal. Details are not described herein in this embodiment of this application. In addition, it should be further noted that this step is an optional step in this embodiment of this application. When this step is performed, an execution sequence of this step and step 304 may not be limited. Alternatively, in some possible cases, this step may be performed in step 306. That is, after collision control access is completed, in a handshake access phase, the access device may send a signal to the user equipment, so that the user equipment performs clock synchronization based on a physical characteristic of the signal.

After the user equipment performs clock synchronization with the access device, a latency of interaction between the user equipment and the access device decreases. For example, after the clock synchronization, a latency of interaction between the user equipment and the access device is not greater than a preset threshold. The preset threshold may be 50 ppm of a frequency of signal exchange between the user equipment and the access device. For example, it is assumed that, before the clock synchronization, the latency of interaction between the user equipment and the access device may be 200 ppm of the frequency of signal exchange, and after the clock synchronization, the latency of interaction between the user equipment and the access device may decrease to 50 ppm of the frequency of signal exchange.

Step 306: The user equipment performs negotiating capability with the access device based on the target carrier set in the handshake access phase.

In this embodiment of this application, after the user equipment completes the carrier set selection and the clock synchronization, the collision control access phase is completed. In this case, the handshake access phase is entered. In the handshake access phase, the user equipment may send a first identifier to the access device where the first identifier is used to indicate that the current device enters a transaction initial state. After receiving the first identifier sent by the user equipment, the access device may send a second identifier to the user equipment, where the second identifier is used to indicate that the access device also enters the transaction initial state. After receiving the second identifier, the user equipment may interact with the access device based on the target carrier set, to perform capability negotiation, mode selection, or the like.

It should be noted that the first identifier may be a flag code used to indicate a start and an end of a frame in a high-level data link control (HDLC) protocol. Usually, the first identifier may be 01111110. After completing the clock synchronization and the target carrier set selection, the user equipment may send the first identifier to the access device, to notify the access device that the user equipment has completed the clock synchronization and the target carrier set selection, and entered the transaction initial state. After receiving the first identifier sent by the user equipment, the access device learns that the user equipment has entered the transaction initial state. In this case, the access device may send, to the user equipment, the second identifier that is the same as the first identifier, to notify the user equipment that the access device also enters the transaction initial state. Therefore, after learning that the two parties enter the transaction initial state, the user equipment and the access device may determine that a start-up procedure of the handshake access phase is currently completed. Then, the user equipment and the access device may perform a subsequent clear-down procedure and message exchange procedure of the handshake access phase based on the determined target carrier set.

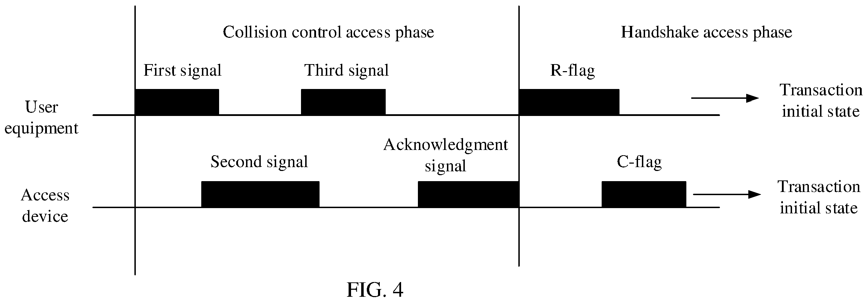

FIG. 4 is a flowchart of a time sequence in which user equipment interacts with an access device. As shown in FIG. 4, after the user equipment sends a third signal to the access device, the access device may return an acknowledgment signal to the user equipment at downlink frequencies included in a target carrier set. After receiving the acknowledgment signal sent by the access device at the target carrier set, the user equipment may send R-flag 1, that is, a first identifier, to the access device. In this case, the user equipment enters a transaction initial state. After receiving the first identifier, the access device may send C-flag 1, that is, a second identifier, to the user equipment. In this case, the access device also enters the transaction initial state. It should be noted that the user equipment may send a plurality of first identifiers to the access device. When receiving one of the plurality of first identifiers, the access device may send the second identifier to the user equipment.

Optionally, in another possible implementation, after sending the acknowledgment signal to the user equipment, the access device may directly send a third identifier to the user equipment after specific duration. The third identifier is used to indicate that the access device is to enter a transaction initial state next. After receiving the third identifier sent by the access device, after completing clock synchronization and target carrier set selection, the user equipment may send a first identifier to the access device, to give, to the access device, an indication that the user equipment has completed the clock synchronization and the target carrier set selection, and entered the transaction initial state. After receiving the first identifier, the access device may feed back, to the user equipment, a second identifier that is the same as the first identifier, to notify the user equipment that the access device also enters the transaction initial state. Therefore, after learning that the two parties enter the transaction initial state, the user equipment and the access device may determine that a start-up procedure of a handshake access phase is currently completed. Then, the user equipment and the access device may perform a subsequent clear-down procedure and message exchange procedure of the handshake access phase based on the determined target carrier set.

It should be noted that the third identifier may be a complementary code of the first identifier. For example, when the first identifier is 01111110, the third identifier may be 10000001.

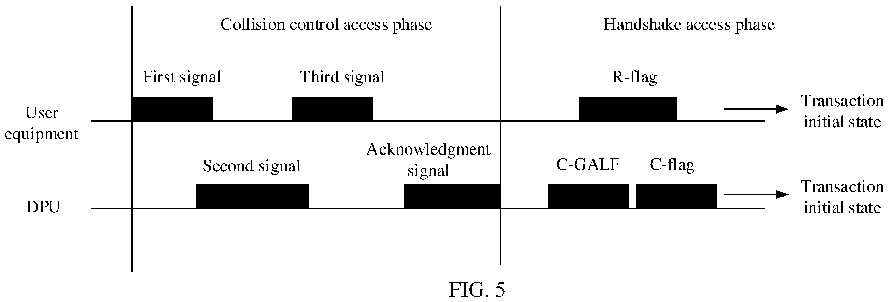

FIG. 5 is a flowchart of another time sequence in which user equipment interacts with an access device. As shown in FIG. 5, after sending an acknowledgement signal to the user equipment, the access device may send C-GALF, that is, a third identifier, to the user equipment after specific duration. Similarly, one or more third identifiers may be sent. When receiving a third identifier, the user equipment may send R-flag to the access device. In this case, the user equipment enters a transaction initial state. When receiving R-flag, the access device may send C-flag to the user equipment. In this case, the access device enters the transaction initial state.

It should be noted that the access device may alternatively send the third identifier immediately after sending the acknowledgement signal, that is, interval duration between a fourth signal and the third identifier may be 0.

Optionally, in another possible implementation, after sending an acknowledgment signal to the user equipment, the access device may directly send a second identifier to the user equipment after specific duration, to notify the user equipment that the access device currently enters the transaction initial state. After receiving the third identifier sent by the access device, after completing clock synchronization and target carrier set selection, the user equipment may send a first identifier to the access device, to give, to the access device, an indication that the user equipment has completed the clock synchronization and the target carrier set selection, and entered the transaction initial state. Therefore, after learning that the two parties enter the transaction initial state, the user equipment and the access device may determine that a start-up procedure of a handshake access phase is currently completed. Then, the user equipment and the access device may perform a subsequent clear-down procedure and message exchange procedure of the handshake access phase based on a determined target carrier set.

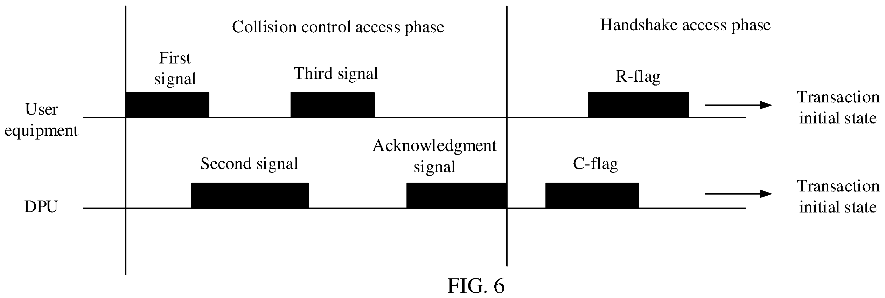

FIG. 6 is a flowchart of still another time sequence in which user equipment interacts with an access device. As shown in FIG. 6, after sending an acknowledgement signal to the user equipment, the access device may send C-flag, that is, a second identifier, to the user equipment after specific duration. In this case, the access device enters a transaction initial state. Similarly, one or more second identifiers may be sent. When receiving a second identifier, the user equipment may send R-flag to the access device. In this case, the user equipment enters the transaction initial state.

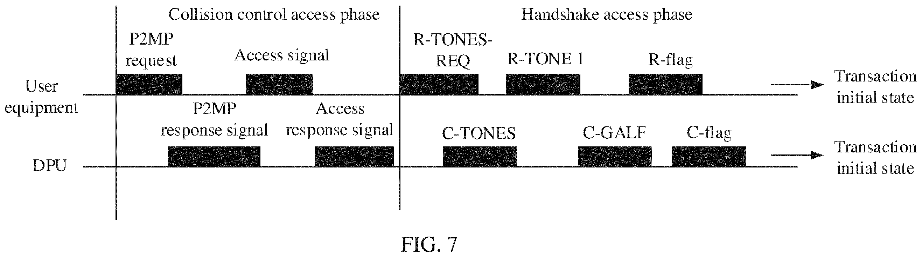

FIG. 7 is a flowchart of a time sequence in which user equipment interacts with an access device when the user equipment gets online in a related technology. As shown in FIG. 7, in the related technology, the user equipment may first send a P2MP request to the access device, and the access device feeds back a P2MP response signal to the user equipment. After receiving the P2MP response signal, the user equipment sends an access signal to the access device. After receiving the access signal, the access device feeds back an access response signal to the user equipment. Then, the user equipment may send an R-TONES-REQ signal, that is, a frequency selection request, to the access device at frequencies included in a plurality of carrier sets. After receiving the R-TONES-REQ signal, the access device may send C-TONES, that is, a frequency response signal, to the user equipment at frequencies included in the plurality of carrier sets. Then, the user equipment may select a carrier set from the plurality of carrier sets, and send an R-TONE 1 signal, that is, a frequency selection signal, at frequencies included in the selected carrier set. After receiving the R-TONE 1 signal, the access device may send C-GALF, that is, a third identifier, to the user equipment. After receiving C-GALF, the user equipment may send R-flag to the access device. In this case, the user equipment enters a transaction initial state. After receiving R-flag, the access device feeds back C-flag to the user equipment. In this case, the access device enters the transaction initial state. Subsequently, the user equipment interacts with the access device to perform a subsequent clear-down procedure and message exchange procedure of a handshake access phase, to complete get-online.

It can be learned, through comparison between time sequence diagrams (that is, FIG. 4 to FIG. 6) of get-online performed by using the get-online method for user equipment provided in this embodiment of this application and a time sequence diagram (that is, FIG. 7) of get-online performed by using the related technology, that in this embodiment of the application, clock synchronization and carrier set selection processes implemented in a handshake access phase in the related technology by using the R-TONES-REQ signal, the C-TONES signal, and the R-TONE 1 signal are implemented in a collision control access phase, and clock synchronization and carrier set selection are completed by using signals exchanged between the user equipment and the access device in this phase. That is, in this embodiment of the application, user equipment registration, clock synchronization, and carrier set selection may be all completed in the collision control access phase. In this way, the clock synchronization and carrier set selection procedures implemented in the handshake access phase in the related technology by using the R-TONES-REQ signal, the C-TONES signal, and the R-TONE 1 signal can be omitted, thereby shortening a network access procedure of the user equipment, and reducing get-online duration of the user equipment.

In this embodiment of this application, in the collision control access phase, the user equipment may send the first signal to the access device at the first uplink frequency. The first uplink frequency is an uplink frequency supported by the P2MP connection. Then, the user equipment may receive the second signal that is in response to the first signal and that is sent by the access device at the first downlink frequency and the second downlink frequencies, where the first downlink frequency is a downlink frequency supported by the P2MP connection, and the second downlink frequencies are downlink frequencies supported by the P2P connection; and send the third signal to the access device at the first uplink frequency and the plurality of uplink frequencies included in the target carrier set, to complete carrier set selection, and simultaneously perform clock synchronization based on the second signal. The user equipment may perform negotiating capability with the access device based on the target carrier set in the handshake access phase. Therefore, it can be learned that in this embodiment of this application, when getting online, the user equipment can complete the clock synchronization and the carrier set selection in the collision control access phase. In this way, the user equipment subsequently does not need to perform clock synchronization and carrier set selection through separate signaling exchange in the handshake access phase, thereby reducing interaction procedures and shortening access time.

In the get-online method for user equipment described in the foregoing embodiment, the access device provides the initial to-be-selected carrier sets for the user equipment, and then the user equipment selects the target carrier set. Optionally, in a possible case, the user equipment may provide initial to-be-selected carrier sets, the access device selects candidate carrier sets, and the user equipment performs acknowledgment to determine a final target carrier set. Next, the get-online method is described with reference to FIG. 8.

FIG. 8 is a flowchart of another get-online method for user equipment according to an embodiment of this application. Refer to FIG. 8. The method includes the following steps.

Step 801: In a collision control access phase, user equipment sends a first signal to an access device at a first uplink frequency and second uplink frequencies.

The first uplink frequency is an uplink frequency supported by the user equipment when the user equipment uses a P2MP connection, and the second uplink frequencies are uplink frequencies supported by the user equipment when the user equipment uses a P2P connection.

It should be noted that, the user equipment may select, from uplink frequencies supported by the user equipment when the user equipment uses the P2MP connection, a frequency as the first uplink frequency. In addition, all frequencies supported by each device when the device uses the P2P connection may be assigned to a plurality of carrier sets, and each carrier set may include a plurality of uplink frequencies and a plurality of downlink frequencies. For example, each carrier set may include three uplink frequencies and three downlink frequencies. Based on this, the user equipment may select, from a plurality of carrier sets, carrier sets supported by the user equipment, and select uplink frequencies from the carrier sets supported by the user equipment. The carrier sets supported by the user equipment are carrier sets that include uplink frequencies supported by the user equipment. The selected uplink frequencies may be referred to as the second uplink frequencies. In addition, the selected uplink frequencies may be all uplink frequencies included in the carrier sets supported by the user equipment, or may be some uplink frequencies selected from each of the carrier sets supported by the user equipment, or may be all or some uplink frequencies of some carrier sets selected from the carrier sets supported by the user equipment.

In this embodiment of this application, when the user equipment needs to get online again after getting offline, the user equipment may actively send the first signal to the access device at the first uplink frequency and the second uplink frequencies. The first uplink frequency is used to request to access a network in the P2MP connection. The second uplink frequencies are used to provide initial to-be-selected carrier sets for the access device.

Step 802: The access device sends, to the user equipment at a first downlink frequency and a plurality of second downlink frequencies, a second signal that is in response to the first signal.

The first downlink frequency is a downlink frequency supported by the access device when the access device uses the P2MP connection, and the plurality of second downlink frequencies are downlink frequencies that are selected based on the second uplink frequencies and that are supported by the access device when the access device uses the P2P connection.

After receiving the first signal sent by the user equipment, the access device may determine whether the access device supports the P2MP connection. If the access device supports the P2MP connection, the access device may obtain the carrier sets including the second uplink frequencies, select, from the carrier sets, carrier sets supported by the access device, use, as a target carrier set, one of the carrier sets supported by the access device, and use, as the plurality of second downlink frequencies, a plurality of downlink frequencies included in the target carrier set, to send the second signal that is in response to the first signal to the user equipment at the first downlink frequency and the plurality of second downlink frequencies. The plurality of second downlink frequencies may be all or some of downlink frequencies in the target carrier set. In addition, it can be learned from the foregoing that there may be a plurality of second uplink frequencies, and the carrier sets including the second uplink frequencies are carrier sets including any second uplink frequencies.

In this case, a part of the second signal at the first downlink frequency is used to notify the user equipment that the access device supports the P2MP connection, that is, allows to be accessed by the user equipment in the P2MP connection. Parts of the second signal at the plurality of second downlink frequencies are used to indicate the carrier sets selected by the access device, so that the user equipment performs carrier set acknowledgment.

Optionally, in another possible case, the access device may obtain the carrier sets including the second uplink frequencies, select, from the carrier sets, carrier sets supported by the access device, and use, as the second downlink frequencies, downlink frequencies included in a plurality of carrier sets included in the carrier sets supported by the access device, to send the second signal that is in response to the first signal to the user equipment at the first downlink frequency and the plurality of second downlink frequencies. The plurality of carrier sets may be all carrier sets that include the second uplink frequencies and that are supported by the access device, or some of all carrier sets that include the second uplink frequencies and that are supported by the access device. The plurality of second downlink frequencies may be all downlink frequencies included in the plurality of carrier sets, or the plurality of second downlink frequencies may include some downlink frequencies selected from each of the plurality of carrier sets. It should be noted that, it can be learned from the foregoing that there may be a plurality of second uplink frequencies, and the carrier sets that include the second uplink frequencies and that are obtained by the access device are carrier sets including any second uplink frequencies.

Step 803: The user equipment receives the second signal that is in response to the first signal and that is sent by the access device at the first downlink frequency and the plurality of second downlink frequencies.

Step 804: The user equipment sends a third signal to the access device at the first uplink frequency and a plurality of third uplink frequencies included in a target carrier set, where the target carrier set is a subset of an intersection set of carrier sets including the plurality of third uplink frequencies and some or all of the plurality of second downlink frequencies and carrier sets allowed to be used by the user equipment.

After receiving the second signal sent by the access device at the first downlink frequency and the plurality of second downlink frequencies, the user equipment may learn, based on the first downlink frequency, that the access device allows to be accessed in a P2MP connection. In addition, the user equipment may acknowledge the target carrier set based on the plurality of second downlink frequencies.

For example, in a possible implementation, if the plurality of second downlink frequencies are downlink frequencies in the target carrier set selected by the access device, the user equipment may determine and obtain a carrier set, that is, the target carrier set, based on the plurality of second downlink frequencies. The target carrier set includes the second downlink frequencies, and includes the plurality of third uplink frequencies. In this case, the user equipment may directly send the third signal to the access device at the plurality of third uplink frequencies included in the target carrier set, to acknowledge the target carrier set selected by the access device.

Optionally, in another possible implementation, if the plurality of second downlink frequencies are the downlink frequencies in the plurality of the carrier sets that are supported by the access device and that include the second uplink frequencies, the user equipment may determine the plurality of carrier sets based on the plurality of second downlink frequencies, select, from the plurality of carrier sets, a plurality of candidate carrier sets recommended by the user equipment, and send a fourth signal to the access device at a plurality of uplink frequencies included in the plurality of candidate carrier sets. After receiving the fourth signal, the access device may determine the plurality of candidate carrier sets based on the plurality of uplink frequencies used to send the fourth signal, select a candidate carrier set from the plurality of candidate carrier sets as the target carrier set, and send a fifth signal to the user equipment at downlink frequencies included in the target carrier set. After receiving the fifth signal, the user equipment may send the third signal to the access device at the plurality of third uplink frequencies included in the target carrier set, to acknowledge the target carrier set selected by the access device.

Optionally, in still another possible implementation, if the plurality of second downlink frequencies are the downlink frequencies in the plurality of the carrier sets that are supported by the access device and that include the second uplink frequencies, the user equipment may determine the plurality of carrier sets based on the plurality of second downlink frequencies, select a candidate carrier set from the plurality of carrier sets as the target carrier set, and send the third signal at the plurality of third uplink frequencies included in the target candidate carrier set.

The plurality of third uplink frequencies may be all uplink frequencies in the target carrier set, or may be some uplink frequencies in the target carrier set.

It should be noted that the target carrier set is selected from the carrier sets that include the second downlink frequencies and that are supported by the user equipment. Therefore, it can be learned that the target carrier set is the subset of the intersection set of the carrier sets including some or all of the second downlink frequencies and the carrier sets allowed to be used by the user equipment.

It should be noted that the first signal, the second signal, the third signal, the fourth signal, and the fifth signal may be signals that include information content, or may be common signals that include no information content. In addition, the signals are mainly used to implement connection acknowledgment, carrier set selection, or the like by using frequencies used to send these signals.

Step 805: The user equipment performs clock synchronization based on a physical characteristic of the second signal.

In this embodiment of this application, when receiving the second signal, when determining, by using step 804, the target carrier set based on the second downlink frequencies at which the second signal is located, the user equipment may further perform clock synchronization based on the physical characteristic of the second signal.

For an implementation process in which the user equipment performs clock synchronization based on the physical characteristic of the second signal, refer to step 305 in the foregoing embodiment. Details are not described herein again in this embodiment of this application.

Step 806: Perform negotiating capability with the access device based on the target carrier set in a handshake access phase.

In this embodiment of this application, after the user equipment completes the carrier set selection and the clock synchronization, the collision control access phase is completed. In this case, the handshake access phase is entered. In the handshake access phase, the user equipment and the access device may perform negotiating capability with reference to the related implementation in step 806 in the foregoing embodiment.

In this embodiment of this application, in the collision control access phase, the user equipment provides to-be-selected carrier sets. Then, carrier set selection and clock synchronization are completed through interaction between the user equipment and the access device. In this way, the user equipment can perform negotiating capability with the access device based on the target carrier set in the handshake access phase. Therefore, it can be learned that in this embodiment of this application, when getting online, the user equipment can complete the clock synchronization and the carrier set selection in the collision control access phase. In this way, the user equipment subsequently does not need to perform clock synchronization and carrier set selection through separate signaling exchange in the handshake access phase, thereby reducing interaction procedures and shortening access time.

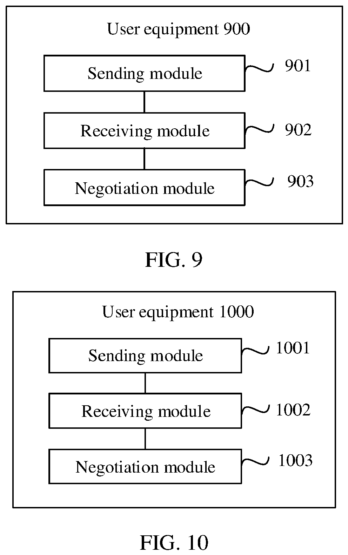

Refer to FIG. 9. An embodiment of this application provides user equipment 900. The user equipment 900 includes:
a sending module 901, configured to perform steps 301 and 304 in the foregoing embodiment;
a receiving module 902, configured to perform step 303 in the foregoing embodiment; and
a negotiation module 903, configured to perform step 306 in the foregoing embodiment.

Optionally, the user equipment 900 further includes (not shown in the figure):
an obtaining module, configured to obtain the carrier sets including the second downlink frequencies; and
a selection module, configured to use, as the target carrier set, a carrier set in the obtained carrier sets that is allowed to be used by the user equipment.

Optionally, the user equipment 900 further includes an obtaining module and a selection module (not shown in the figure).

The obtaining module is configured to obtain a plurality of carrier sets that include the second downlink frequencies and that are allowed to be used by the user equipment;
the sending module 901 is further configured to send a fourth signal to the access device at the first uplink frequency and a plurality of third uplink frequencies included in the plurality of carrier sets;
the receiving module 902 is further configured to receive a fifth signal that is in response to the fourth signal and that is sent by the access device at the first downlink frequency and a plurality of third downlink frequencies included in a plurality of candidate carrier sets, where the plurality of candidate carrier sets are some of the plurality of carrier sets; and
the selection module is configured to select a carrier set from the plurality of candidate carrier sets as the target carrier set.

Optionally, the user equipment further includes:
a synchronization module, configured to perform clock synchronization based on a physical characteristic of the second signal.

Optionally, the negotiation module 903 is specifically configured to:
send a first identifier to the access device in the handshake access phase, where the first identifier is used to indicate that the current device enters a transaction initial state; and
when receiving a second identifier that is in response to the first identifier and that is sent by the access device, perform exchanging message with the access device based on the target carrier set, to implement capability negotiation between the current device and the access device, where the second identifier is used to indicate that the access device enters the transaction initial state.

Optionally, the negotiation module 903 is specifically configured to:
in the handshake access phase, receive a third identifier sent by the access device, where the third identifier is used to indicate that the access device starts transaction initialization;
send a first identifier that is in response to the third identifier to the access device, where the first identifier is used to indicate that the current device enters a transaction initial state; and
when receiving a second identifier that is in response to the first identifier and that is sent by the access device, perform exchanging message with the access device based on the target carrier set, to implement capability negotiation between the current device and the access device, where the second identifier is used to indicate that the access device enters the transaction initial state.

Optionally, the negotiation module 903 is specifically configured to:
in the handshake access phase, receive a second identifier sent by the access device, and send a first identifier that is in response to the second identifier to the access device, where the second identifier is used to indicate that the access device enters a transaction initial state, and the first identifier is used to indicate that the current device enters the transaction initial state; and
perform exchanging message with the access device based on the target carrier set, to implement capability negotiation between the current device and the access device.

In conclusion, in this embodiment of this application, in the collision control access phase, the user equipment may send the first signal to the access device at the first uplink frequency. The first uplink frequency is an uplink frequency supported by a P2MP connection. Then, the user equipment may receive the second signal that is in response to the first signal and that is sent by the access device at the first downlink frequency and the second downlink frequencies, where the first downlink frequency is a downlink frequency supported by the P2MP connection, and the second downlink frequencies are downlink frequencies supported by a P2P connection; and send the third signal to the access device at the first uplink frequency and the plurality of uplink frequencies included in the target carrier set, to complete carrier set selection, and simultaneously perform clock synchronization based on the second signal. The user equipment may perform negotiating capability with the access device based on the target carrier set in the handshake access phase. Therefore, it can be learned that in this embodiment of this application, when getting online, the user equipment can complete the clock synchronization and the carrier set selection in the collision control access phase. In this way, the user equipment subsequently does not need to perform clock synchronization and carrier set selection through separate signaling exchange in the handshake access phase, thereby reducing interaction procedures and shortening access time.

Refer to FIG. 10. An embodiment of this application provides user equipment 1000. The user equipment 1000 includes:
a sending module 1001, configured to perform steps 801 and 804 in the foregoing embodiment;
a receiving module 1002, configured to perform step 803 in the foregoing embodiment; and
a negotiation module 1003, configured to perform step 806 in the foregoing embodiment.

Optionally, the user equipment 1000 further includes (not shown in the figure):
an obtaining module, configured to obtain carrier sets including any of the plurality of second downlink frequencies; and
a selection module, configured to use, as the target carrier set, a carrier set in the obtained carrier sets that is allowed to be used by the user equipment.

Optionally, the user equipment 1000 further includes (not shown in the figure):
a synchronization module, configured to perform clock synchronization based on a physical characteristic of the second signal.

Optionally, the negotiation module 1003 is specifically configured to:
send a first identifier to the access device in the handshake access phase, where the first identifier is used to indicate that the current device enters a transaction initial state; and
when receiving a second identifier that is in response to the first identifier and that is sent by the access device, perform exchanging message with the access device based on the target carrier set, to implement capability negotiation between the current device and the access device, where the second identifier is used to indicate that the access device enters the transaction initial state.

Optionally, the negotiation module 1003 is specifically configured to:
in the handshake access phase, receive a third identifier sent by the access device, where the third identifier is used to indicate that the access device starts transaction initialization;
send a first identifier that is in response to the third identifier to the access device, where the first identifier is used to indicate that the current device enters a transaction initial state; and
when receiving a second identifier that is in response to the first identifier and that is sent by the access device, perform exchanging message with the access device based on the target carrier set, to implement capability negotiation between the current device and the access device, where the second identifier is used to indicate that the access device enters the transaction initial state.

Optionally, the negotiation module 1003 is specifically configured to:
in the handshake access phase, receive a second identifier sent by the access device, and send a first identifier that is in response to the second identifier to the access device, where the second identifier is used to indicate that the access device enters a transaction initial state, and the first identifier is used to indicate that the current device enters the transaction initial state; and
perform exchanging message with the access device based on the target carrier set, to implement capability negotiation between the current device and the access device.

In this embodiment of this application, in the collision control access phase, the user equipment provides to-be-selected carrier sets. Then, carrier set selection and clock synchronization are completed through interaction between the user equipment and the access device. In this way, the user equipment can perform negotiating capability with the access device based on the target carrier set in the handshake access phase. Therefore, it can be learned that in this embodiment of this application, when getting online, the user equipment can complete the clock synchronization and the carrier set selection in the collision control access phase. In this way, the user equipment subsequently does not need to perform clock synchronization and carrier set selection through separate signaling exchange in the handshake access phase, thereby reducing interaction procedures and shortening access time.

It should be noted that, when the apparatus provided in the foregoing embodiments gets online, division into the foregoing functional modules is merely used as an example for description. During actual application, the foregoing functions may be allocated to different functional modules for implementation based on a requirement. In other words, a device is divided into different functional modules in terms of an inner structure, to implement all or a part of the functions described above. In addition, the user equipment provided in the foregoing embodiments and the embodiments of the get-online methods for user equipment are based on a same concept. For a specific implementation process of the user equipment, refer to the method embodiments, and details are not described herein again.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer instructions are loaded and executed on a computer, the procedure or functions according to the embodiments of the present invention are completely or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a digital versatile disc (DVD)), a semiconductor medium (for example, a solid-state drive (SSD)), or the like.

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, a compact disc, or the like.

The foregoing descriptions are merely embodiments of this application, but are not intended to limit this application.

## Claims

1. A get-online method for user equipment (103), wherein the method comprises:
in a collision control access phase, sending a first signal to an access device (102) at a first uplink frequency, wherein the first uplink frequency is an uplink frequency supported by a point-to-multipoint, P2MP, connection;
receiving a second signal that is in response to the first signal and that is sent by the access device (102) at a first downlink frequency and second downlink frequencies, wherein the first downlink frequency is a downlink frequency supported by the P2MP connection, and the second downlink frequencies are downlink frequencies supported by a point-to-point, P2P, connection;
sending a third signal to the access device (102) at the first uplink frequency and a plurality of second uplink frequencies comprised in a target carrier set, wherein the target carrier set is a subset of an intersection set of carrier sets comprising the second downlink frequencies and carrier sets allowed to be used by the user equipment (103), the second uplink frequencies are uplink frequencies supported by the P2P connection, and each carrier set comprises a plurality of uplink frequencies and a plurality of downlink frequencies; and
performing negotiating capability with the access device (102) based on the target carrier set in a handshake access phase.

2. The method according to claim 1, wherein before the sending a third signal to the access device (102) at the first uplink frequency and a target carrier set, the method further comprises:
obtaining the carrier sets comprising the second downlink frequencies; and
using, as the target carrier set, a carrier set in the obtained carrier sets that is allowed to be used by the user equipment (103).

3. The method according to claim 1, wherein before the sending a third signal to the access device (102) at the first uplink frequency and a target carrier set, the method further comprises:
obtaining a plurality of carrier sets that comprise the second downlink frequencies and that are allowed to be used by the user equipment (103);
sending a fourth signal to the access device (102) at the first uplink frequency and a plurality of third uplink frequencies comprised in the plurality of carrier sets;
receiving a fifth signal that is in response to the fourth signal and that is sent by the access device (102) at the first downlink frequency and a plurality of third downlink frequencies comprised in a plurality of candidate carrier sets, wherein the plurality of candidate carrier sets are some of the plurality of carrier sets; and
selecting a carrier set from the plurality of candidate carrier sets as the target carrier set.

4. The method according to claim 1, wherein after the receiving a second signal that is in response to the first signal and that is sent by the access device (102) at a first downlink frequency and second downlink frequencies, the method further comprises:
performing clock synchronization based on a physical characteristic of the second signal.

5. The method according to any one of claims 1 to 4, wherein the performing negotiating capability with the access device (102) based on the target carrier set in a handshake access phase comprises:
in the handshake access phase, sending a first identifier to the access device (102), wherein the first identifier is used to indicate that the current device enters a transaction initial state; and
when receiving a second identifier that is in response to the first identifier and that is sent by the access device (102), performing exchanging message with the access device (102) based on the target carrier set, wherein the second identifier is used to indicate that the access device (102) enters the transaction initial state.

6. The method according to any one of claims 1 to 4, wherein the performing negotiating capability with the access device (102) based on the target carrier set in a handshake access phase comprises:
in the handshake access phase, receiving a third identifier sent by the access device (102), wherein the third identifier is used to indicate that the access device (102) starts transaction initialization;
sending a first identifier that is in response to the third identifier to the access device (102), wherein the first identifier is used to indicate that the current device enters a transaction initial state; and
when receiving a second identifier that is in response to the first identifier and that is sent by the access device (102), performing exchanging message with the access device (102) based on the target carrier set, wherein the second identifier (102) is used to indicate that the access device enters the transaction initial state.

7. The method according to any one of claims 1 to 4, wherein the performing negotiating capability with the access device (102) based on the target carrier set in a handshake access phase comprises:
in the handshake access phase, receiving a second identifier sent by the accessdevice (102), and sending a first identifier that is in response to the second identifier to the access device (102), wherein the second identifier is used to indicate that the access device (102)
enters a transaction initial state, and the first identifier is used to indicate that the current device enters the transaction initial state; and
performing exchanging message with the access device (102) based on the target carrier set.

8. A get-online method for user equipment (103), wherein the method comprises:
in a collision control access phase, sending a first signal to an access device (102) at a first uplink frequency and second uplink frequencies, wherein the first uplink frequency is an uplink frequency supported by a point-to-multipoint, P2MP, connection, and the second uplink frequencies are uplink frequencies supported by a point-to-point, P2P, connection;
receiving a second signal that is in response to the first signal and that is sent by the access device (102) at a first downlink frequency and a plurality of second downlink frequencies, wherein the first downlink frequency is a downlink frequency supported by the P2MP connection, and the plurality of second downlink frequencies are downlink frequencies that are selected by the access device (102) based on the second uplink frequencies and that are supported by the P2P connection;
sending a third signal to the access device (102) at the first uplink frequency and a plurality of third uplink frequencies comprised in a target carrier set, wherein the target carrier set is a subset of an intersection set of carrier sets comprising some or all of the plurality of second downlink frequencies and carrier sets allowed to be used by the user equipment (103), the plurality of third uplink frequencies are uplink frequencies supported by the P2P connection, and each carrier set comprises a plurality of uplink frequencies and a plurality of downlink frequencies; and
performing negotiating capability with the access device (102) based on the target carrier set in a handshake access phase.

9. The method according to claim 8, wherein before the sending a third signal to the access device (102) at the first uplink frequency and a plurality of third uplink frequencies comprised in a target carrier set, the method further comprises:
obtaining carrier sets comprising any of the plurality of second downlink frequencies; and
using, as the target carrier set, a carrier set in the obtained carrier sets that is allowed to be used by the user equipment (103),

10. A user equipment (103), wherein the user equipment comprises a sending module, a receiving module, and a negotiation module, wherein
the sending module is configured to: in a collision control access phase, send a first signal to an access device (102) at a first uplink frequency, wherein the first uplink frequency is an uplink frequency supported by a point-to-multipoint P2MP connection;
the receiving module is configured to receive a second signal that is in response to the first signal and that is sent by the access device (102) at a first downlink frequency and second downlink frequencies, wherein the first downlink frequency is a downlink frequency supported by the P2MP connection, and the second downlink frequencies are downlink frequencies supported by a point-to-point P2P connection;
the sending module is further configured to send a third signal to the access device (102) at the first uplink frequency and a plurality of second uplink frequencies comprised in a target carrier set, wherein the target carrier set is a subset of an intersection set of carrier sets comprising the second downlink frequencies and carrier sets allowed to be used by the user equipment (103), the second uplink frequencies are uplink frequencies supported by the P2P connection, and each carrier set comprises a plurality of uplink frequencies and a plurality of downlink frequencies; and
the negotiation module is configured to perform negotiating capability with the access device (102) based on the target carrier set in a handshake access phase.

11. The user equipment (103) according to claim 10, wherein the user equipment further comprises:
an obtaining module, configured to obtain the carrier sets comprising the second downlink frequencies; and
a selection module, configured to use, as the target carrier set, a carrier set in the obtained carrier sets that is allowed to be used by the user equipment (103).

12. The user equipment (103) according to claim 10, wherein the user equipment further comprises an obtaining module and a selection module, wherein
the obtaining module is configured to obtain a plurality of carrier sets that comprise the second downlink frequencies and that are allowed to be used by the user equipment (103);
the sending module is further configured to send a fourth signal to the access device (102) at the first uplink frequency and a plurality of third uplink frequencies comprised in the plurality of carrier sets;
the receiving module is further configured to receive a fifth signal that is in response to the fourth signal and that is sent by the access device (102) at the first downlink frequency and a plurality of third downlink frequencies comprised in a plurality of candidate carrier sets, wherein the plurality of candidate carrier sets are some of the plurality of carrier sets; and
the selection module is configured to select a carrier set from the plurality of candidate carrier sets as the target carrier set.

13. The user equipment (103) according to claim 10, wherein the user equipment further comprises:
a synchronization module, configured to perform clock synchronization based on a physical characteristic of the second signal.

14. A user equipment (103), wherein the user equipment comprises a sending module, a receiving module, and a negotiation module, wherein
the sending module is configured to: in a collision control access phase, send a first signal to an access device (102) at a first uplink frequency and second uplink frequencies, wherein the first uplink frequency is an uplink frequency supported by a point-to-multipoint P2MP connection, and the second uplink frequencies are uplink frequencies supported by a point-to-point P2P connection;
the receiving module is configured to receive a second signal that is in response to the first signal and that is sent by the access device (102) at a first downlink frequency and a plurality of second downlink frequencies, wherein the first downlink frequency is a downlink frequency supported by the P2MP connection, and the plurality of second downlink frequencies are downlink frequencies that are selected by the access device (102) based on the second uplink frequencies and that are supported by the P2P connection;
the sending module is further configured to send a third signal to the access device (102) at the first uplink frequency and a plurality of third uplink frequencies comprised in a target carrier set, wherein the target carrier set is a subset of an intersection set of carrier sets comprising some or all of the plurality of second downlink frequencies and carrier sets allowed to be used by the user equipment (103), the plurality of third uplink frequencies are uplink frequencies supported by the P2P connection, and each carrier set comprises a plurality of uplink frequencies and a plurality of downlink frequencies; and
the negotiation module is configured to perform negotiating capability with the access device (102) based on the target carrier set in a handshake access phase.

15. The user equipment (103) according to claim 14, wherein the user equipment further comprises:
an obtaining module, configured to obtain carrier sets comprising any of the plurality of second downlink frequencies; and
a selection module, configured to use, as the target carrier set, a carrier set in the obtained carrier sets that is allowed to be used by the user equipment (103).

## Patentansprüche

1. Get-Online-Verfahren für eine Benutzereinrichtung (103), wobei das Verfahren umfasst:
in einer Kollisionssteuerungszugriffsphase, Senden eines ersten Signals an eine Zugriffsvorrichtung (102) mit einer ersten Uplink-Frequenz, wobei die erste Uplink-Frequenz eine Uplink-Frequenz ist, die durch eine Punkt-zu-Mehrpunkt-Verbindung, P2MP-Verbindung, unterstützt wird;
Empfangen eines zweiten Signals, das als Reaktion auf das erste Signal erfolgt und das durch die Zugriffsvorrichtung (102) mit einer ersten Downlink-Frequenz und zweiten Downlink-Frequenzen gesendet wird, wobei die erste Downlink-Frequenz eine Downlink-Frequenz ist, die durch die P2MP-Verbindung unterstützt wird, und zweiten Downlink-Frequenzen Downlink-Frequenzen sind, die durch eine Punkt-zu-Punkt-Verbindung, P2P-Verbindung, unterstützt werden;
Senden eines dritten Signals an die Zugriffsvorrichtung (102) mit der ersten Uplink-Frequenz und einer Vielzahl von zweiten Uplink-Frequenzen, die in einem Zielträgersatz enthalten sind, wobei der Zielträgersatz eine Teilmenge eines Kreuzungssatzes von Trägersätzen ist, die die zweiten Downlink-Frequenzen und Trägersätze, die durch die Benutzereinrichtung (103) verwendet werden dürfen, umfassen, wobei die zweiten Uplink-Frequenzen Uplink-Frequenzen sind, die durch die P2P-Verbindung unterstützt werden, und jeder Trägersatz eine Vielzahl von Uplink-Frequenzen und eine Vielzahl von Downlink-Frequenzen umfasst; und
Durchführen einer Verhandlungsbefähigung mit der Zugriffsvorrichtung (102) basierend auf dem Zielträgersatz in einer Handshake-Zugriffsphase.

2. Verfahren nach Anspruch 1, wobei vor dem Senden eines dritten Signals an die Zugriffsvorrichtung (102) mit der ersten Uplink-Frequenz und einem Zielträgersatz das Verfahren ferner umfasst:
Erhalten der Trägersätze, die die zweiten Downlink-Frequenzen umfassen; und
Verwenden, als den Zielträgersatz, eines Trägersatzes in den erhaltenen Trägersätzen, der durch die Benutzereinrichtung (103) verwendet werden darf.

3. Verfahren nach Anspruch 1, wobei vor dem Senden eines dritten Signals an die Zugriffsvorrichtung (102) mit der ersten Uplink-Frequenz und einem Zielträgersatz das Verfahren ferner umfasst:
Erhalten einer Vielzahl von Trägersätzen, die die zweiten Downlink-Frequenzen umfassen und durch die Benutzereinrichtung (103) verwendet werden dürfen;
Senden eines vierten Signals an die Zugriffsvorrichtung (102) mit der ersten Uplink-Frequenz und einer Vielzahl von dritten Uplink-Frequenzen, die in der Vielzahl von Trägersätzen enthalten sind;
Empfangen eines fünften Signals, das als Reaktion auf das vierte Signal erfolgt und das durch die Zugriffsvorrichtung (102) mit der ersten Downlink-Frequenz und einer Vielzahl von dritten Downlink-Frequenzen gesendet wird, die in einer Vielzahl von Kandidatenträgersätzen enthalten sind, wobei die Vielzahl von Kandidatenträgersätzen einige der Vielzahl von Trägersätzen sind; und
Auswählen eines Trägersatzes aus der Vielzahl von Kandidatenträgersätzen als der Zielträgersatz.

4. Verfahren nach Anspruch 1, wobei nach dem Empfangen eines zweiten Signals, das als Reaktion auf das erste Signal erfolgt und das durch die Zugriffsvorrichtung (102) mit einer ersten Downlink-Frequenz und zweiten Downlink-Frequenzen gesendet wird, das Verfahren ferner umfasst:
Durchführen einer Taktsynchronisation basierend auf einer physikalischen Eigenschaft des zweiten Signals.

5. Verfahren nach einem der Ansprüche 1 bis 4, wobei das Durchführen einer Verhandlungsbefähigung mit der Zugriffsvorrichtung (102) basierend auf dem Zielträgersatz in einer Handshake-Zugriffsphase umfasst:
in der Handshake-Zugriffsphase, Senden einer ersten Kennung an die Zugriffsvorrichtung (102), wobei die erste Kennung verwendet wird, um anzugeben, dass die aktuelle Vorrichtung in einen Transaktionsanfangszustand eintritt; und
beim Empfangen einer zweiten Kennung, die als Reaktion auf die erste Kennung erfolgt und die durch die Zugriffsvorrichtung (102) gesendet wird,
Durchführen eines Austauschs einer Nachricht mit der Zugriffsvorrichtung (102) basierend auf dem Zielträgersatz, wobei die zweite Kennung verwendet wird, um anzugeben, dass die Zugriffsvorrichtung (102) in den Transaktionsanfangszustand eintritt.

6. Verfahren nach einem der Ansprüche 1 bis 4, wobei das Durchführen einer Verhandlungsbefähigung mit der Zugriffsvorrichtung (102) basierend auf dem Zielträgersatz in einer Handshake-Zugriffsphase umfasst:
in der Handshake-Zugriffsphase, Empfangen einer dritten Kennung, die durch die Zugriffsvorrichtung (102) gesendet wird, wobei die dritte Kennung verwendet wird, um anzugeben, dass die Zugriffsvorrichtung (102) die Transaktionsinitialisierung startet;
Senden einer ersten Kennung, die als Reaktion auf die dritte Kennung erfolgt, an die Zugriffsvorrichtung (102), wobei die erste Kennung verwendet wird, um anzugeben, dass die aktuelle Vorrichtung in einen Transaktionsanfangszustand eintritt; und
beim Empfangen einer zweiten Kennung, die als Reaktion auf die erste Kennung erfolgt und die durch die Zugriffsvorrichtung (102) gesendet wird, Durchführen eines Austauschs einer Nachricht mit der Zugriffsvorrichtung (102) basierend auf dem Zielträgersatz, wobei die zweite Kennung verwendet wird, um anzugeben, dass die Zugriffsvorrichtung (102) in den Transaktionsanfangszustand eintritt.

7. Verfahren nach einem der Ansprüche 1 bis 4, wobei das Durchführen einer Verhandlungsbefähigung mit der Zugriffsvorrichtung (102) basierend auf dem Zielträgersatz in einer Handshake-Zugriffsphase umfasst:
in der Handshake-Zugriffsphase, Empfangen einer zweiten Kennung, die durch die Zugriffsvorrichtung (102) gesendet wird, und Senden einer ersten Kennung, die als Reaktion auf die zweite Kennung erfolgt, an die Zugriffsvorrichtung (102), wobei die zweite Kennung verwendet wird, um anzugeben, dass die Zugriffsvorrichtung (102) in einen Transaktionsanfangszustand eintritt, und die erste Kennung verwendet wird, um anzugeben, dass die aktuelle Vorrichtung in den Transaktionsanfangszustand eintritt; und
Durchführen eines Austauschs einer Nachricht mit der Zugriffsvorrichtung (102) basierend auf dem Zielträgersatz.

8. Get-Online-Verfahren für eine Benutzereinrichtung (103), wobei das Verfahren umfasst:
in einer Kollisionssteuerungszugriffsphase, Senden eines ersten Signals an eine Zugriffsvorrichtung (102) mit einer ersten Uplink-Frequenz und zweiten Uplink-Frequenzen, wobei die erste Uplink-Frequenz eine Uplink-Frequenz ist, die durch eine Punkt-zu-Multipunkt-Verbindung, P2MP-Verbindung, unterstützt wird, und die zweiten Uplink-Frequenzen Uplink-Frequenzen sind, die durch eine Punkt-zu-Punkt-Verbindung, P2P-Verbindung, unterstützt werden;
Empfangen eines zweiten Signals, das als Reaktion auf das erste Signal erfolgt und das durch die Zugriffsvorrichtung (102) mit einer ersten Downlink-Frequenz und einer Vielzahl von zweiten Downlink-Frequenzen gesendet wird, wobei die erste Downlink-Frequenz eine Downlink-Frequenz ist, die durch die P2MP-Verbindung unterstützt wird, und die Vielzahl von zweiten Downlink-Frequenzen Downlink-Frequenzen sind, die durch die Zugriffsvorrichtung (102) basierend auf den zweiten Uplink-Frequenzen ausgewählt werden und die durch die P2P-Verbindung unterstützt werden;
Senden eines dritten Signals an die Zugriffsvorrichtung (102) mit der ersten Uplink-Frequenz und einer Vielzahl von dritten Uplink-Frequenzen, die in einem Zielträgersatz enthalten sind, wobei der Zielträgersatz eine Teilmenge eines Kreuzungssatzes von Trägersätzen ist, die einige oder alle der Vielzahl von zweiten Downlink-Frequenzen und Trägersätzen umfasst, die durch die Benutzereinrichtung (103) verwendet werden dürfen, wobei die Vielzahl von dritten Uplink-Frequenzen Uplink-Frequenzen sind, die durch die P2P-Verbindung unterstützt werden, und jeder Trägersatz eine Vielzahl von Uplink-Frequenzen und eine Vielzahl von Downlink-Frequenzen umfasst; und
Durchführen einer Verhandlungsbefähigung mit der Zugriffsvorrichtung (102) basierend auf dem Zielträgersatz in einer Handshake-Zugriffsphase.

9. Verfahren nach Anspruch 8, wobei vor dem Senden eines dritten Signals an die Zugriffsvorrichtung (102) mit der ersten Uplink-Frequenz und einer Vielzahl von dritten Uplink-Frequenzen, die in einem Zielträgersatz enthalten sind, das Verfahren ferner umfasst:
Erhalten von Trägersätzen, die eine beliebige der Vielzahl von zweiten Downlink-Frequenzen umfassen; und
Verwenden, als den Zielträgersatz, eines Trägersatzes in den erhaltenen Trägersätzen, der durch die Benutzereinrichtung (103) verwendet werden darf.

10. Benutzereinrichtung (103),
wobei die Benutzereinrichtung ein Sendemodul, ein Empfangsmodul und ein Verhandlungsmodul umfasst, wobei das Sendemodul konfiguriert ist, um: in einer Kollisionssteuerungszugriffsphase ein erstes Signal an eine Zugriffsvorrichtung (102) mit einer ersten Uplink-Frequenz zu senden, wobei die erste Uplink-Frequenz eine Uplink-Frequenz ist, die durch eine Punkt-zu-Mehrpunkt-P2MP-Verbindung unterstützt wird;
das Empfangsmodul konfiguriert ist, um ein zweites Signal zu empfangen, das als Reaktion auf das erste Signal erfolgt und das durch die Zugriffsvorrichtung (102) mit einer ersten Downlink-Frequenz und zweiten Downlink-Frequenzen gesendet wird, wobei die erste Downlink-Frequenz eine Downlink-Frequenz ist, die durch die P2MP-Verbindung unterstützt wird und die zweiten Downlink-Frequenzen Downlink-Frequenzen sind, die durch eine Punkt-zu-Punkt-P2P-Verbindung unterstützt werden;
das Sendemodul ferner konfiguriert ist, um ein drittes Signal an die Zugriffsvorrichtung (102) mit der ersten Uplink-Frequenz und einer Vielzahl von zweiten Uplink-Frequenzen zu senden, die in einem Zielträgersatz enthalten sind, wobei der Zielträgersatz eine Teilmenge eines Kreuzungssatzes von Trägersätzen ist, die die zweiten Downlink-Frequenzen und Trägersätze umfasst, die durch die Benutzereinrichtung (103) verwendet werden dürfen, wobei die zweiten Uplink-Frequenzen Uplink-Frequenzen sind, die durch die P2P-Verbindung unterstützt werden, und jeder Trägersatz eine Vielzahl von Uplink-Frequenzen und eine Vielzahl von Downlink-Frequenzen umfasst; und
das Verhandlungsmodul konfiguriert ist, um eine Verhandlungsbefähigung mit der Zugriffsvorrichtung (102) basierend auf dem Zielträgersatz in einer Handshake-Zugriffsphase durchzuführen.

11. Benutzereinrichtung (103) nach Anspruch 10, wobei die Benutzereinrichtung ferner umfasst:
ein Erhaltenmodul, das konfiguriert ist, um die Trägersätze zu erhalten, die die zweiten Downlink-Frequenzen umfassen; und
ein Auswahlmodul, das konfiguriert ist, um als den Zielträgersatz einen Trägersatz in den erhaltenen Trägersätzen zu verwenden, der durch die Benutzereinrichtung (103) verwendet werden darf.

12. Benutzereinrichtung (103) nach Anspruch 10, wobei die Benutzereinrichtung ferner ein Erhaltenmodul und ein Auswahlmodul umfasst, wobei
das Erhaltenmodul konfiguriert ist, um eine Vielzahl von Trägersätzen zu erhalten, die die zweiten Downlink-Frequenzen umfassen und die durch die Benutzereinrichtung (103) verwendet werden dürfen;
das Sendemodul ferner konfiguriert ist, um ein viertes Signal an die Zugriffsvorrichtung (102) mit der ersten Uplink-Frequenz und einer Vielzahl von dritten Uplink-Frequenzen zu senden, die in der Vielzahl von Trägersätzen enthalten sind;
das Empfangsmodul ferner konfiguriert ist, um ein fünftes Signal zu empfangen, das als Reaktion auf das vierte Signal erfolgt und das durch die Zugriffsvorrichtung (102) mit der ersten Downlink-Frequenz und einer Vielzahl von dritten Downlink-Frequenzen gesendet wird, die in einer Vielzahl von Kandidatenträgersätzen enthalten sind, wobei die Vielzahl von Kandidatenträgersätzen einige der Vielzahl von Trägersätzen sind; und
das Auswahlmodul konfiguriert ist, um einen Trägersatz aus der Vielzahl von Kandidatenträgersätzen als den Zielträgersatz auszuwählen.

13. Benutzereinrichtung (103) nach Anspruch 10, wobei die Benutzereinrichtung ferner umfasst:
ein Synchronisationsmodul, das konfiguriert ist, um eine Taktsynchronisation basierend auf einer physikalischen Eigenschaft des zweiten Signals durchzuführen.

14. Benutzereinrichtung (103),
wobei die Benutzereinrichtung ein Sendemodul, ein Empfangsmodul und ein Verhandlungsmodul umfasst, wobei
das Sendemodul konfiguriert ist um: in einer Kollisionssteuerungszugriffsphase ein erstes Signal an eine Zugriffsvorrichtung (102) mit einer ersten Uplink-Frequenz und zweiten Uplink-Frequenzen zu senden, wobei die erste Uplink-Frequenz eine Uplink-Frequenz ist, die durch eine Punkt-zu-Mehrpunkt-P2MP-Verbindung unterstützt wird, und die zweiten Uplink-Frequenzen Uplink-Frequenzen sind, die durch eine Punkt-zu-Punkt-P2P-Verbindung unterstützt werden;
das Empfangsmodul konfiguriert ist, um ein zweites Signal zu empfangen, das als Reaktion auf das erste Signal erfolgt und das durch die Zugriffsvorrichtung (102) mit einer ersten Downlink-Frequenz und einer Vielzahl von zweiten Downlink-Frequenzen gesendet wird, wobei die erste Downlink-Frequenz eine Downlink-Frequenz ist, die durch die P2MP-Verbindung unterstützt wird, und die Vielzahl von zweiten Downlink-Frequenzen Downlink-Frequenzen sind, die durch die Zugriffsvorrichtung (102) basierend auf den zweiten Uplink-Frequenzen ausgewählt werden und die durch die P2P-Verbindung unterstützt werden;
das Sendemodul ferner konfiguriert ist, um ein drittes Signal an die Zugriffsvorrichtung (102) mit der ersten Uplink-Frequenz und einer Vielzahl von dritten Uplink-Frequenzen zu senden, die in einem Zielträgersatz enthalten sind, wobei der Zielträgersatz eine Teilmenge eines Kreuzungssatzes von Trägersätzen ist, die einige oder alle der Vielzahl von zweiten Downlink-Frequenzen und Trägersätzen umfasst, die durch die Benutzereinrichtung (103) verwendet werden dürfen, wobei die Vielzahl von dritten Uplink-Frequenzen Uplink-Frequenzen sind, die durch die P2P-Verbindung unterstützt werden, und jeder Trägersatz eine Vielzahl von Uplink-Frequenzen und eine Vielzahl von Downlink-Frequenzen umfasst; und
das Verhandlungsmodul konfiguriert ist, um eine Verhandlungsbefähigung mit der Zugriffsvorrichtung (102) basierend auf dem Zielträgersatz in einer Handshake-Zugriffsphase durchzuführen.

15. Benutzereinrichtung (103) nach Anspruch 14, wobei die Benutzereinrichtung ferner umfasst:
ein Erhaltenmodul, das konfiguriert ist, um Trägersätze zu erhalten, die eine beliebige der Vielzahl von zweiten Downlink-Frequenzen umfassen; und
ein Auswahlmodul, das konfiguriert ist, um als den Zielträgersatz einen Trägersatz in den erhaltenen Trägersätzen zu verwenden, der durch die Benutzereinrichtung (103) verwendet werden darf.

## Revendications

1. Procédé de mise en ligne d'un équipement utilisateur (103), le procédé comprenant :
dans une phase d'accès de commande de collision, l'envoi d'un premier signal à un dispositif d'accès (102) à une première fréquence de liaison montante, la première fréquence de liaison montante étant une fréquence de liaison montante prise en charge par une connexion point à multipoint, P2MP ;
la réception d'un deuxième signal qui est en réponse au premier signal et qui est envoyé par le dispositif d'accès (102) à une première fréquence de liaison descendante et des deuxièmes fréquences de liaison descendante, la première fréquence de liaison descendante étant une fréquence de liaison descendante prise en charge par la connexion P2MP, et les deuxièmes fréquences de liaison descendante étant des fréquences de liaison descendante prises en charge par une connexion point à point, P2P ;
l'envoi d'un troisième signal au dispositif d'accès (102) à la première fréquence de liaison montante et d'une pluralité de deuxièmes fréquences de liaison montante comprises dans un ensemble de porteuses cible, l'ensemble de porteuses cible étant un sous-ensemble d'un ensemble d'intersection d'ensembles de porteuses comprenant les deuxièmes fréquences de liaison descendante et des ensembles de porteuses autorisés à être utilisés par l'équipement utilisateur (103), les deuxièmes fréquences de liaison montante étant des fréquences de liaison montante prises en charge par la connexion P2P, et chaque ensemble de porteuses comprenant une pluralité de fréquences de liaison montante et une pluralité de fréquences de liaison descendante ; et
la réalisation d'une capacité de négociation avec le dispositif d'accès (102) sur la base de l'ensemble de porteuses cible dans une phase d'accès d'établissement de liaison.

2. Procédé selon la revendication 1, dans lequel avant l'envoi d'un troisième signal au dispositif d'accès (102) à la première fréquence de liaison montante et à un ensemble de porteuses cible, le procédé comprend en outre :
l'obtention des ensembles de porteuses comprenant les deuxièmes fréquences de liaison descendante ; et
l'utilisation, comme ensemble de porteuses cible, d'un ensemble de porteuses dans les ensembles de porteuses obtenus qui peut être utilisé par l'équipement utilisateur (103).

3. Procédé selon la revendication 1, dans lequel avant l'envoi d'un troisième signal au dispositif d'accès (102) à la première fréquence de liaison montante et à un ensemble de porteuses cible, le procédé comprend en outre :
l'obtention d'une pluralité d'ensembles de porteuses qui comprennent les deuxièmes fréquences de liaison descendante et qui peuvent être utilisées par l'équipement utilisateur (103) ;
l'envoi d'un quatrième signal au dispositif d'accès (102) à la première fréquence de liaison montante et d'une pluralité de troisièmes fréquences de liaison montante comprises dans la pluralité d'ensembles de porteuses ;
la réception d'un cinquième signal qui est en réponse au quatrième signal et qui est envoyé par le dispositif d'accès (102) à la première fréquence de liaison descendante et à une pluralité de troisièmes fréquences de liaison descendante comprises dans une pluralité d'ensembles de porteuses candidats, la pluralité d'ensembles de porteuses candidats faisant partie de la pluralité d'ensembles de porteuses ; et
la sélection d'un ensemble de porteuses parmi la pluralité d'ensembles de porteuses candidats comme ensemble de porteuses cible.

4. Procédé selon la revendication 1, dans lequel après la réception d'un deuxième signal qui est en réponse au premier signal et qui est envoyé par le dispositif d'accès (102) à une première fréquence de liaison descendante et des deuxièmes fréquences de liaison descendante, le procédé comprend en outre :
la réalisation d'une synchronisation d'horloge sur la base d'une caractéristique physique du deuxième signal.

5. Procédé selon l'une quelconque des revendications 1 à 4, dans lequel la réalisation de la capacité de négociation avec le dispositif d'accès (102) sur la base de l'ensemble de porteuses cible dans une phase d'accès d'établissement de liaison comprend :
dans la phase d'accès d'établissement de liaison, l'envoi d'un premier identifiant au dispositif d'accès (102), le premier identifiant étant utilisé pour indiquer que le dispositif actuel entre dans un état initial de transaction ; et
lors de la réception d'un deuxième identifiant qui est en réponse au premier identifiant et qui est envoyé par le dispositif d'accès (102),
la réalisation d'un échange de messages avec le dispositif d'accès (102) sur la base de l'ensemble de porteuses cibles, le deuxième identifiant étant utilisé pour indiquer que le dispositif d'accès (102) entre dans l'état initial de transaction.

6. Procédé selon l'une quelconque des revendications 1 à 4, dans lequel la réalisation de la capacité de négociation avec le dispositif d'accès (102) sur la base de l'ensemble de porteuses cible dans une phase d'accès d'établissement de liaison comprend :
dans la phase d'accès d'établissement de liaison, la réception d'un troisième identifiant envoyé par le dispositif d'accès (102), le troisième identifiant étant utilisé pour indiquer que le dispositif d'accès (102) commence l'initialisation de transaction ;
l'envoi d'un premier identifiant qui est en réponse au troisième identifiant au dispositif d'accès (102), le premier identifiant étant utilisé pour indiquer que le dispositif actuel entre dans un état initial de transaction ; et
lors de la réception d'un second identifiant qui est en réponse au premier identifiant et qui est envoyé par le dispositif d'accès (102), la réalisation d'un échange de messages avec le dispositif d'accès (102) sur la base de l'ensemble de porteuses cible, le deuxième identifiant étant utilisé pour indiquer le dispositif d'accès (102) entre dans l'état initial de transaction.

7. Procédé selon l'une quelconque des revendications 1 à 4, dans lequel la réalisation de la capacité de négociation avec le dispositif d'accès (102) sur la base de l'ensemble de porteuses cible dans une phase d'accès d'établissement de liaison comprend :
dans la phase d'accès d'établissement de liaison, la réception d'un deuxième identifiant envoyé par le dispositif d'accès (102) et l'envoi d'un premier identifiant qui est en réponse au deuxième identifiant au dispositif d'accès (102), le deuxième identifiant étant utilisé pour indiquer que le dispositif d'accès (102) entre dans un état initial de transaction, et le premier identifiant est utilisé pour indiquer que le dispositif actuel entre dans l'état initial de transaction ; et
la réalisation d'un échange de messages avec le dispositif d'accès (102) sur la base de l'ensemble de porteuses cible.

8. Procédé de mise en ligne d'un équipement utilisateur (103), le procédé comprenant :
dans une phase d'accès de commande de collision, l'envoi d'un premier signal à un dispositif d'accès (102) à une première fréquence de liaison montante et des deuxièmes fréquences de liaison montante, la première fréquence de liaison montante étant une fréquence de liaison montante prise en charge par une connexion point à multipoint, P2MP, et les deuxièmes fréquences de liaison montante étant des fréquences de liaison montante prises en charge par une connexion point à point, P2P ;
la réception d'un deuxième signal qui est en réponse au premier signal et qui est envoyé par le dispositif d'accès (102) à une première fréquence de liaison descendante et une pluralité de deuxièmes fréquences de liaison descendante, la première fréquence de liaison descendante étant une fréquence de liaison descendante prise en charge par la connexion P2MP, et la pluralité de deuxièmes fréquences de liaison descendante étant des fréquences de liaison descendante qui sont sélectionnées par le dispositif d'accès (102) sur la base des deuxièmes fréquences de liaison montante et qui sont prises en charge par la connexion P2P ;
l'envoi d'un troisième signal au dispositif d'accès (102) à la première fréquence de liaison montante et d'une pluralité de troisièmes fréquences de liaison montante comprises dans un ensemble de porteuses cible, l'ensemble de porteuses cible étant un sous-ensemble d'un ensemble d'intersection d'ensembles de porteuses comprenant une partie ou la totalité de la pluralité de deuxièmes fréquences de liaison descendante et des ensembles de porteuses autorisés à être utilisés par l'équipement utilisateur (103), la pluralité de troisièmes fréquences de liaison montante étant des fréquences de liaison montante prises en charge par la connexion P2P, et chaque ensemble de porteuses comprenant une pluralité de fréquences de liaison montante et une pluralité de fréquences de liaison descendante ; et
la réalisation d'une capacité de négociation avec le dispositif d'accès (102) sur la base de l'ensemble de porteuses cible dans une phase d'accès d'établissement de liaison.

9. Procédé selon la revendication 8, dans lequel avant l'envoi d'un troisième signal au dispositif d'accès (102) à la première fréquence de liaison montante et à une pluralité de troisièmes fréquences de liaison montante comprises dans un ensemble de porteuses cible, le procédé comprend en outre :
l'obtention d'ensembles de porteuses comprenant l'une quelconque de la pluralité de deuxièmes fréquences de liaison descendante ; et
l'utilisation, comme ensemble de porteuses cibles, d'un ensemble de porteuses dans les ensembles de porteuses obtenus qui peut être utilisé par l'équipement utilisateur (103).

10. Un équipement utilisateur (103),
dans lequel l'équipement utilisateur comprend un module d'envoi, un module de réception et un module de négociation, le module d'envoi étant configuré pour : dans une phase d'accès de commande de collision, envoyer un premier signal à un dispositif d'accès (102) à une première fréquence de liaison montante, dans lequel la première fréquence de liaison montante est une fréquence de liaison montante prise en charge par une connexion P2MP point à multipoint ;
le module de réception est configuré pour recevoir un deuxième signal qui est en réponse au premier signal et qui est envoyé par le dispositif d'accès (102) à une première fréquence de liaison descendante et des deuxièmes fréquences de liaison descendante, la première fréquence de liaison descendante étant une fréquence de liaison descendante prise en charge par la connexion P2MP et les deuxièmes fréquences de liaison descendante étant des fréquences de liaison descendante prises en charge par une connexion P2P point à point ;
le module d'envoi est en outre configuré pour envoyer un troisième signal au dispositif d'accès (102) à la première fréquence de liaison montante et à une pluralité de deuxièmes fréquences de liaison montante comprises dans un ensemble de porteuses cible, l'ensemble de porteuses cible étant un sous-ensemble d'un ensemble d'intersection d'ensembles de porteuses comprenant les deuxièmes fréquences de liaison descendante et des ensembles de porteuses autorisés à être utilisés par l'équipement utilisateur (103), les deuxièmes fréquences de liaison montante étant des fréquences de liaison montante prises en charge par la connexion P2P, et chaque ensemble de porteuses comprenant une pluralité de fréquences de liaison montante et une pluralité de fréquences de liaison descendante ; et
le module de négociation est configuré pour réaliser une capacité de négociation avec le dispositif d'accès (102) sur la base de l'ensemble de porteuses cible dans une phase d'accès d'établissement de liaison.

11. Équipement utilisateur (103) selon la revendication 10, dans lequel l'équipement utilisateur comprend en outre :
un module d'obtention, configuré pour obtenir les ensembles de porteuses comprenant les deuxièmes fréquences de liaison descendante ; et
un module de sélection, configuré pour utiliser, comme ensemble de porteuses cible, un ensemble de porteuses dans les ensembles de porteuses obtenus qui peut être utilisé par l'équipement utilisateur (103).

12. Équipement utilisateur (103) selon la revendication 10, dans lequel l'équipement utilisateur comprend en outre un module d'obtention et un module de sélection, dans lequel
le module d'obtention est configuré pour obtenir une pluralité d'ensembles de porteuses qui comprennent les deuxièmes fréquences de liaison descendante et qui peuvent être utilisées par l'équipement utilisateur (103) ;
le module d'envoi est en outre configuré pour envoyer un quatrième signal au dispositif d'accès (102) à la première fréquence de liaison montante et une pluralité de troisièmes fréquences de liaison montante comprises dans la pluralité d'ensembles de porteuses ;
le module de réception est en outre configuré pour recevoir un cinquième signal qui est en réponse au quatrième signal et qui est envoyé par le dispositif d'accès (102) à la première fréquence de liaison descendante et à une pluralité de troisièmes fréquences de liaison descendante comprises dans une pluralité d'ensembles de porteuses candidats, la pluralité d'ensembles de porteuses candidats étant certains de la pluralité d'ensembles de porteuses ; et
le module de sélection est configuré pour sélectionner un ensemble de porteuses parmi la pluralité d'ensembles de porteuses candidats comme ensemble de porteuses cible.

13. Équipement utilisateur (103) selon la revendication 10, dans lequel l'équipement utilisateur comprend en outre :
un module de synchronisation, configuré pour effectuer une synchronisation d'horloge sur la base d'une caractéristique physique du deuxième signal.

14. Un équipement utilisateur (103),
dans lequel l'équipement utilisateur comprend un module d'envoi, un module de réception et un module de négociation, dans lequel
le module d'envoi est configuré pour : dans une phase d'accès de commande de collision, envoyer un premier signal à un dispositif d'accès (102) à une première fréquence de liaison montante et à des deuxièmes fréquences de liaison montante, la première fréquence de liaison montante étant une fréquence de liaison montante prise en charge par une connexion point à multipoint, P2MP, et les deuxièmes fréquences de liaison montante étant des fréquences de liaison montante prises en charge par une connexion point à point, P2P ;
le module de réception est configuré pour recevoir un deuxième signal qui est en réponse au premier signal et qui est envoyé par le dispositif d'accès (102) à une première fréquence de liaison descendante et une pluralité de deuxièmes fréquences de liaison descendante, la première fréquence de liaison descendante étant une fréquence de liaison descendante prise en charge par la connexion P2MP, et la pluralité de deuxièmes fréquences de liaison descendante étant des fréquences de liaison descendante qui sont sélectionnées par le dispositif d'accès (102) sur la base des deuxièmes fréquences de liaison montante et qui sont prises en charge par la connexion P2P ;
le module d'envoi est en outre configuré pour envoyer un troisième signal au dispositif d'accès (102) à la première fréquence de liaison montante et à une pluralité de troisièmes fréquences de liaison montante comprises dans un ensemble de porteuses cible, l'ensemble de porteuses cible étant un sous-ensemble d'un ensemble d'intersection des ensembles de porteuses comprenant une partie ou la totalité de la pluralité de deuxièmes fréquences de liaison descendante et des ensembles de porteuses autorisés à être utilisés par l'équipement utilisateur (103), la pluralité de troisièmes fréquences de liaison montante étant des fréquences de liaison montante prises en charge par la connexion P2P, et chaque ensemble de porteuses comprend une pluralité de fréquences de liaison montante et une pluralité de fréquences de liaison descendante ; et
le module de négociation est configuré pour réaliser une capacité de négociation avec le dispositif d'accès (102) sur la base de l'ensemble de porteuses cible dans une phase d'accès d'établissement de liaison.

15. Équipement utilisateur (103) selon la revendication 14, dans lequel l'équipement utilisateur comprend en outre :
un module d'obtention, configuré pour obtenir des ensembles de porteuses comprenant l'une quelconque de la pluralité de deuxièmes fréquences de liaison descendante ; et
un module de sélection, configuré pour utiliser, comme ensemble de porteuses cible, un ensemble de porteuses dans les ensembles de porteuses obtenus qui peut être utilisé par l'équipement utilisateur (103).
